# EUROPEAN PATENT SPECIFICATION

(11) **EP 3 678 351 B1**
(45) Date of publication and mention of the grant of the patent: **18.11.2026**
(21) Application number: 18863362.2
(22) Date of filing: 29.08.2018
(51) Int. Cl.: H04W 24/02, H04L 41/5009, H04L 41/5019, H04L 41/5054, H04L 67/141, H04L 67/61, H04W 88/18, H04W 92/24

(54) **METHOD AND DEVICE FOR NETWORK RESOURCE DEPLOYMENT AND ASSESSMENT**
VERFAHREN UND VORRICHTUNG ZUR BEREITSTELLUNG UND BEWERTUNG VON NETZWERKRESSOURCEN
PROCÉDÉ ET DISPOSITIF DE DÉPLOIEMENT ET D'ÉVALUATION DE RESSOURCES RÉSEAU

(30) Priority: 30.09.2017 CN 201710922482
(43) Date of publication of application: 08.07.2020
(73) Proprietor: Huawei Technologies Co., Ltd., Longgang District Shenzhen, Guangdong 518129 (CN)
(72) Inventor: XU, Ruiyue, Shenzhen, Guangdong 518129 (CN); ZHANG, Kai, Shenzhen, Guangdong 518129 (CN); LI, Yan, Shenzhen, Guangdong 518129 (CN)
(74) Representative: Thun, Clemens
(86) International application number: PCT/CN2018/103093
(87) International publication number: WO 2019/062457

(56) References cited:
- CN-A- 106 572 517
- CN-A- 106 657 194
- US-A1- 2017 063 598
- US-A1- 2017 141 973
- US-A1- 2017 208 019
- US-A1- 2017 264 535
- "3rd Generation Partnership Project; Technical Specification Group Services and System Aspects; Telecommunication management; Study on management and orchestration of network slicing for next generation network (Release 15)", 3GPP STANDARD ; TECHNICAL REPORT ; 3GPP TR 28.801, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V15.0.0, 25 September 2017 (2017-09-25), pages 1 - 78, XP051337191

## Description

### TECHNICAL FIELD

This application relates to the field of communications technologies, and in particular, to a network resource deployment method and device, and a network resource assessment method and device.

### BACKGROUND

A network slice (network slice) technology is introduced into a new generation communications system. By using the technology, a network may be divided into a plurality of logically independent network slices, and each network slice may serve a service in a particular scenario, thereby greatly improving network flexibility.

To satisfy requirements of different services, a mechanism of automatically deploying a network slice is introduced. However, in the prior art, a network slice is deployed by obtaining a network resource (for example, a resource such as an air interface resource or a device resource) that is already deployed in an existing network; but if the network resource that is already deployed in the existing network cannot satisfy a requirement of deploying the network slice, the network slice fails to be deployed. Consequently, user experience is reduced.

The document US 2017/208019 A1 shows a network slice management system and slice management method.

The document US 2017/141973 A1 shows a system and method for network slice management.

The document "3rd Generation Partnership Project; Technical specification group services and system aspects; telecommunication management; study on management and orchestration of network slicing for next generation network (release 15)", 3GPP standard technical report 3GPP TR 28.801, XP051337191 is a standardization document dealing with network slice management in communications systems.

### SUMMARY

The present invention is defined by the independent claims. Embodiments labeled as inventive embodiments in the following, which are not covered by the scope of protection defined by the independent claims, are to be understood as examples helpful for understanding the invention, but not as embodiments of the invention.

Embodiments of this application provide a network resource deployment method and device, and a network resource assessment method and device, to help improve a possibility of successful network slice deployment.

According to a first aspect, a network resource deployment method according to an embodiment of this application includes:
receiving, by a first device, a target network management request; then determining, based on target network requirement information, requirement information of a to-be-deployed network resource required for managing a target network, and finally sending a network resource management request to a second device, where the target network management request includes the target network requirement information; the requirement information of the to-be-deployed network resource includes at least one of air interface resource requirement information, user quantity requirement information, throughput requirement information, coverage requirement information, radio bearer RB requirement information, base station requirement information, network element device requirement information, and network function requirement information; and the network resource management request includes the requirement information of the to-be-deployed network resource.

In this embodiment of this application, after determining the requirement information of the to-be-deployed network resource, the first device may send the network resource management request to the second device to deploy the network resource, so that on-demand deployment is implemented, thereby helping improve a possibility of successful target network deployment, and also helps improve network resource utilization.

To simplify an implementation in which the first device determines the requirement information of the to-be-deployed network resource required for managing the target network, specifically, in a possible design, the first device determines, based on the target network requirement information, requirement information of one or more network resources required for managing the target network; and determines the requirement information of the to-be-deployed network resource based on the requirement information of the one or more network resources required for managing the target network and instance information of a network resource already deployed in an existing network.

In a possible design, the first device sends a network resource query request to the second device, where the network resource query request includes the requirement information of the one or more network resources required for managing the target network; and then receives a network resource query result sent by the second device, where the network resource query result includes the instance information of the network resource already deployed in the existing network. The foregoing manner helps the first device obtain the instance information of the network resource already deployed in the existing network.

In a possible design, the first device receives a network resource management notification sent by the second device, where the network resource management notification includes at least one of indication information and instance information of the to-be-deployed network resource, and the indication information indicates whether the to-be-deployed network resource is successfully deployed; and if determining that the to-be-deployed network resource is successfully deployed, the first device manages the target network; or if determining that the to-be-deployed network resource fails to be deployed, the first device returns a target network management request failure. The foregoing technical solution helps the first device obtain a deployment result of the to-be-deployed network resource.

In a possible design, the instance information of the network resource already deployed in the existing network includes at least one of a network resource identifier, a quantity of users supported by the network resource, a throughput supported by the network resource, coverage supported by the network resource, a capacity of the network resource, and a quantity of RBs supported by the network resource.

In a possible design, the first device is a network slice management unit or a network slice subnet management unit; and the second device is a network management unit or an element management unit.

According to a second aspect, a network resource deployment method according to an embodiment of this application includes:
after receiving a network resource management request sent by a first device, deploying, by a second device, a to-be-deployed network resource, where the network resource management request includes requirement information of the to-be-deployed network resource; and the requirement information of the to-be-deployed network resource includes at least one of air interface resource requirement information, user quantity requirement information, throughput requirement information, coverage requirement information, radio bearer requirement information, base station requirement information, network element device requirement information, and network function requirement information.

In this embodiment of this application, the second device can deploy the to-be-deployed network resource based on the network resource management request sent by the first device, to help implement on-demand deployment, improve a possibility of successful target network deployment, and improve network resource utilization.

To help the first device obtain a deployment result of the to-be-deployed network resource, in a possible design, the second device sends a network resource management notification to the first device, where the network resource management notification includes at least one of indication information and instance information of the to-be-deployed network resource, and the indication information indicates whether the to-be-deployed network resource is successfully deployed.

In addition, in this embodiment of this application, after receiving a network resource query request sent by the first device, the second device may further send a network resource query result to the first device, so that the first device obtains instance information of a network resource already deployed in an existing network. The network resource query request includes requirement information of one or more network resources required for managing a target network, and the network resource query result includes the instance information of the network resource already deployed in the existing network.

During specific implementation, in a possible design, after the second device receives the network resource query request sent by the first device, if determining that the network resource already deployed in the existing network cannot satisfy the requirement information of the one or more network resources required for managing the target network, the second device sends the network resource query result to the first device, where the network resource query result includes the instance information of the network resource already deployed in the existing network; or if determining that the network resource already deployed in the existing network can satisfy the requirement information of the one or more network resources required for managing the target network, the second device sends the network resource query result to the first device, where the network resource query result includes identification information used to indicate the network resource that is already deployed in the existing network and that can satisfy the requirement information of the one or more network resources required for managing the target network.

According to a third aspect, a network resource assessment method according to an embodiment of this application includes:
receiving, by a first device, a network pre-assessment request sent by a second device; and then sending a network pre-assessment response to the second device, where the network pre-assessment request includes network requirement information, and the network requirement information indicates a requirement satisfied by a network that needs to be deployed; and the network pre-assessment response includes indication information, and the indication information indicates whether the network can be provided in an existing network.

In this embodiment of this application, the first device can pre-assess, by sending the network pre-assessment request to the second device, whether the network can be provided in the existing network, thereby helping improve a possibility that the first device successfully deploys the network.

In a possible design, the network pre-assessment response further includes requirement information of a to-be-deployed network resource; and the requirement information of the to-be-deployed network resource includes at least one of air interface resource requirement information, user quantity requirement information, throughput requirement information, coverage requirement information, radio bearer RB requirement information, base station requirement information, network element device requirement information, and network function requirement information. According to the foregoing technical solution, the second device can obtain the requirement information of the to-be-deployed network resource, thereby facilitating subsequent deployment of the to-be-deployed network resource.

In a possible design, if the indication information indicates that the network can be provided in the existing network, after sending the network pre-assessment response to the second device, the first device receives a network deployment request sent by the second device, and the network deployment request is used to instruct to deploy the network. The foregoing technical solution helps implement rapid deployment of the network.

In a possible design, if determining that the network can be provided in the existing network, the first device reserves a network resource corresponding to the network in the existing network, and then sends the network pre-assessment response to the second device. The foregoing technical solution helps improve the possibility of successful network deployment. To simplify a process in which the second device determines to reserve the corresponding network resource in the existing network, optionally, the first device allocates a network resource identifier to the reserved network resource corresponding to the network in the existing network. The network pre-assessment response further includes the network resource identifier, and the network resource identifier is used to identify the network resource corresponding to the network in the existing network.

In a possible design, the network deployment request includes the network resource identifier.

According to a fourth aspect, a network resource assessment method according to an embodiment of this application includes:
after sending a network pre-assessment request to a first device, receiving, by a second device, a network pre-assessment response sent by the first network device, where the network pre-assessment request includes network requirement information, and the network requirement information indicates a requirement satisfied by a network that needs to be deployed; and the network pre-assessment response includes indication information, and the indication information indicates whether the network can be provided in an existing network.

In this embodiment of this application, the second device can pre-assess, by sending the network pre-assessment request to the first device, whether the network can be provided in the existing network, thereby helping improve a possibility that the first device successfully deploys the network.

In a possible implementation, after receiving the network pre-assessment response sent by the first device, if determining that the indication information indicates that the network can be provided in the existing network, the second device sends a network deployment request to the first device; or if determining that the indication information indicates that the network cannot be provided in the existing network, the second device sends a network resource deployment request to the first device.

In a possible design, the network pre-assessment response further includes requirement information of a to-be-deployed network resource; and the requirement information of the to-be-deployed network resource includes at least one of air interface resource requirement information, user quantity requirement information, throughput requirement information, coverage requirement information, radio bearer RB requirement information, base station requirement information, network element device requirement information, and network function requirement information. According to the foregoing technical solution, the second device can obtain the requirement information of the to-be-deployed network resource, thereby facilitating subsequent deployment of the to-be-deployed network resource.

According to a fifth aspect, a first device for network resource deployment according to an embodiment of this application includes a transceiver module and a processing module. The transceiver module is configured to receive a target network management request, and the target network management request includes target network requirement information. The processing module is configured to determine, based on the target network requirement information, requirement information of a to-be-deployed network resource required for managing a target network; and the requirement information of the to-be-deployed network resource includes at least one of air interface resource requirement information, user quantity requirement information, throughput requirement information, coverage requirement information, radio bearer RB requirement information, base station requirement information, network element device requirement information, and network function requirement information. The transceiver module is further configured to send a network resource management request to a second device, and the network resource management request includes the requirement information of the to-be-deployed network resource.

In a possible design, the processing module is specifically configured to: determine, based on the target network requirement information, requirement information of one or more network resources required for managing the target network; and determine the requirement information of the to-be-deployed network resource based on the requirement information of the one or more network resources required for managing the target network and instance information of a network resource already deployed in an existing network.

In a possible design, the transceiver module is further configured to: send a network resource query request to the second device, where the network resource query request includes the requirement information of the one or more network resources required for managing the target network; and receive a network resource query result sent by the second device, where the network resource query result includes the instance information of the network resource already deployed in the existing network.

In a possible design, the transceiver module is further configured to receive a network resource management notification sent by the second device, where the network resource management notification includes at least one of indication information and instance information of the to-be-deployed network resource, and the indication information indicates whether the to-be-deployed network resource is successfully deployed; and the processing module is further configured to: if determining that the to-be-deployed network resource is successfully deployed, manage the target network; or if determining that the to-be-deployed network resource fails to be deployed, return a target network management request failure.

In a possible design, the instance information of the network resource already deployed in the existing network includes at least one of a network resource identifier, a quantity of users supported by the network resource, a throughput supported by the network resource, coverage supported by the network resource, a capacity of the network resource, and a quantity of RBs supported by the network resource.

In a possible design, the first device is a network slice management unit or a network slice subnet management unit; and the second device is a network management unit or an element management unit.

It should be noted that, according to any one of the fifth aspect and the possible designs of the fifth aspect, the processing module corresponds to a processor in a hardware device, and the transceiver module corresponds to a transceiver in the hardware module.

According to another aspect, an embodiment of this application further provides a first device, including a processor, a transceiver, and a memory. The memory is configured to store a program instruction and information that is sent and received by the transceiver. The processor is configured to execute the program instruction stored in the memory, to implement the technical solution according to any one of the first aspect or the possible designs of the first aspect of the embodiments of this application.

According to still another aspect, an embodiment of this application further provides a computer storage medium, configured to store a program of the technical solution according to any one of the first aspect or the possible designs of the first aspect.

According to yet another aspect, an embodiment of this application provides a chip. The chip is coupled to a transceiver in a first device, and is configured to perform the technical solution according to any one of the first aspect or the possible designs of the first aspect of the embodiments of this application. It should be understood that "coupled" in this embodiment of this application means that two components are directly or indirectly combined with each other. The combination may be fixed or movable, and the combination may allow communication of fluid, electricity, an electrical signal, or another type of signal between the two components.

According to a sixth aspect, a second device for network resource deployment according to an embodiment of this application includes a processing module and a transceiver module. The transceiver module is configured to receive a network resource management request sent by a first device. The processing module is configured to: after the transceiver module receives the network resource management request sent by the first device, deploy a to-be-deployed network resource. The network resource management request includes requirement information of the to-be-deployed network resource; and the requirement information of the to-be-deployed network resource includes at least one of air interface resource requirement information, user quantity requirement information, throughput requirement information, coverage requirement information, radio bearer requirement information, base station requirement information, network element device requirement information, and network function requirement information.

In a possible design, the transceiver module is further configured to send a network resource management notification to the first device, where the network resource management notification includes at least one of indication information and instance information of the to-be-deployed network resource, and the indication information indicates whether the to-be-deployed network resource is successfully deployed.

In addition, in a possible design, the transceiver module is further configured to: after receiving a network resource query request sent by the first device, send a network resource query result to the first device. The network resource query request includes requirement information of one or more network resources required for managing a target network, and the network resource query result includes instance information of a network resource already deployed in an existing network.

It should be noted that, according to any one of the sixth aspect and the possible designs of the sixth aspect, the processing module corresponds to a processor in a hardware device, and the transceiver module corresponds to a transceiver in the hardware module.

According to another aspect, an embodiment of this application further provides a second device, including a processor, a transceiver, and a memory. The memory is configured to store a program instruction and information that is sent and received by the transceiver. The processor is configured to execute the program instruction stored in the memory, to implement the technical solution according to any one of the second aspect or the possible designs of the second aspect of the embodiments of this application.

According to still another aspect, an embodiment of this application further provides a computer storage medium, configured to store a program of the technical solution according to any one of the second aspect or the possible designs of the second aspect.

According to yet another aspect, an embodiment of this application provides a chip. The chip is coupled to a transceiver in a second device, and is configured to perform the technical solution according to any one of the second aspect or the possible designs of the second aspect of the embodiments of this application. It should be understood that "coupled" in this embodiment of this application means that two components are directly or indirectly combined with each other. The combination may be fixed or movable, and the combination may allow communication of fluid, electricity, an electrical signal, or another type of signal between the two components.

According to a seventh aspect, a communications system according to an embodiment of this application includes the first device according to any one of the fifth aspect or the possible designs of the fifth aspect of the embodiments of this application and the second device according to any one of the sixth aspect or the possible designs of the sixth aspect of the embodiments of this application.

According to an eighth aspect, a first device for network resource assessment according to an embodiment of this application includes a receiving module and a sending module. The receiving module is configured to receive a network pre-assessment request sent by a second device, where the network pre-assessment request includes network requirement information, and the network requirement information indicates a requirement satisfied by a network that needs to be deployed. The sending module is configured to send a network pre-assessment response to the second device, where the network pre-assessment response includes indication information, and the indication information indicates whether the network can be provided in an existing network.

In a possible design, the network pre-assessment response further includes requirement information of a to-be-deployed network resource; and the requirement information of the to-be-deployed network resource includes at least one of air interface resource requirement information, user quantity requirement information, throughput requirement information, coverage requirement information, radio bearer RB requirement information, base station requirement information, network element device requirement information, and network function requirement information.

In a possible design, if the indication information indicates that the network can be provided in the existing network, the receiving module is further configured to: after the sending module sends the network pre-assessment response to the second device, receive a network deployment request sent by the second device, where the network deployment request is used to instruct to deploy the network.

In a possible design, a processing module in the first device is configured to: before the sending module sends the network pre-assessment response to the second device, if determining that the network can be provided in the existing network, reserve a network resource corresponding to the network in the existing network.

In a possible design, the network pre-assessment response further includes a network resource identifier, and the network resource identifier is used to identify the network resource corresponding to the network in the existing network.

In a possible design, the network deployment request includes the network resource identifier.

It should be noted that, according to any one of the eighth aspect or the possible designs of the eighth aspect, the processing module corresponds to a processor in a hardware device, and the receiving module and the sending module correspond to a transceiver in the hardware module.

According to another aspect, an embodiment of this application further provides a first device, including a processor, a transceiver, and a memory. The memory is configured to store a program instruction and information that is sent and received by the transceiver. The processor is configured to execute the program instruction stored in the memory, to implement the technical solution according to any one of the third aspect or the possible designs of the third aspect of the embodiments of this application.

According to still another aspect, an embodiment of this application further provides a computer storage medium, configured to store a program of the technical solution according to any one of the third aspect or the possible designs of the third aspect.

According to yet another aspect, an embodiment of this application provides a chip. The chip is coupled to a transceiver in a first device, and is configured to perform the technical solution according to any one of the third aspect or the possible designs of the third aspect of the embodiments of this application. It should be understood that "coupled" in this embodiment of this application means that two components are directly or indirectly combined with each other. The combination may be fixed or movable, and the combination may allow communication of fluid, electricity, an electrical signal, or another type of signal between the two components.

According to a ninth aspect, a second device for network resource assessment according to an embodiment of this application includes a sending module and a receiving module. The sending module is configured to send a network pre-assessment request to a first device. The receiving module is configured to: after the sending module sends the network pre-assessment request to the first device, receive a network pre-assessment response sent by the first network device. The network pre-assessment request includes network requirement information, and the network requirement information indicates a requirement satisfied by a network that needs to be deployed. The network pre-assessment response includes indication information, and the indication information indicates whether the network can be provided in an existing network.

In a possible implementation, a processing module in the second device is further configured to: after the receiving module receives the network pre-assessment response sent by the first device, if determining that the indication information indicates that the network can be provided in the existing network, trigger the sending module to send a network deployment request to the first device; or if determining that the indication information indicates that the network cannot be provided in the existing network, trigger the sending module to send a network resource deployment request to the first device.

In a possible design, the network pre-assessment response further includes requirement information of a to-be-deployed network resource; and the requirement information of the to-be-deployed network resource includes at least one of air interface resource requirement information, user quantity requirement information, throughput requirement information, coverage requirement information, radio bearer RB requirement information, base station requirement information, network element device requirement information, and network function requirement information. According to the foregoing technical solution, the second device can obtain the requirement information of the to-be-deployed network resource, thereby facilitating subsequent deployment of the to-be-deployed network resource.

It should be noted that, according to any one of the ninth aspect and the possible designs of the ninth aspect, the processing module corresponds to a processor in a hardware device, and the receiving module and the sending module correspond to a transceiver in the hardware module.

According to another aspect, an embodiment of this application further provides a second device, including a processor, a transceiver, and a memory. The memory is configured to store a program instruction and information that is sent and received by the transceiver. The processor is configured to execute the program instruction stored in the memory, to implement the technical solution according to any one of the fourth aspect or the possible designs of the fourth aspect of the embodiments of this application.

According to still another aspect, an embodiment of this application further provides a computer storage medium, configured to store a program of the technical solution according to any one of the fourth aspect or the possible designs of the fourth aspect.

According to yet another aspect, an embodiment of this application provides a chip. The chip is coupled to a transceiver in a second device, and is configured to perform the technical solution according to any one of the fourth aspect or the possible designs of the fourth aspect of the embodiments of this application. It should be understood that "coupled" in this embodiment of this application means that two components are directly or indirectly combined with each other. The combination may be fixed or movable, and the combination may allow communication of fluid, electricity, an electrical signal, or another type of signal between the two components.

According to a tenth aspect, a communications system according to an embodiment of this application includes the first device according to any one of the eighth aspect or the possible designs of the eighth aspect of the embodiments of this application and the second device according to any one of the ninth aspect or the possible designs of the ninth aspect of the embodiments of this application.

### BRIEF DESCRIPTION OF DRAWINGS

FIG. 1a and FIG. 1b are each a schematic diagram of a communication architecture according to an embodiment of this application;
FIG. 2 is a schematic flowchart of a network resource deployment method according to an embodiment of this application;
FIG. 3 is a schematic flowchart of a network resource assessment method according to an embodiment of this application;
FIG. 4 is a schematic flowchart of a network resource assessment method according to an embodiment of this application;
FIG. 5 is a schematic flowchart of a network resource deployment method according to an embodiment of this application;
FIG. 6 is a schematic flowchart of a network resource deployment method according to an embodiment of this application;
FIG. 7 is a schematic flowchart of a network resource deployment method according to an embodiment of this application;
FIG. 8a and FIG. 8b are each a schematic structural diagram of a first device for network resource deployment according to an embodiment of this application;
FIG. 9a and FIG. 9b are each a schematic structural diagram of a second device for network resource deployment according to an embodiment of this application;
FIG. 10 is a schematic structural diagram of a communications system according to an embodiment of this application;
FIG. 11a and FIG. 11b are each a schematic structural diagram of a first device for network resource assessment according to an embodiment of this application;
FIG. 12a and FIG. 12b are each a schematic structural diagram of a second device for network resource assessment according to an embodiment of this application; and
FIG. 13 is a schematic structural diagram of a communications system according to an embodiment of this application.

### DESCRIPTION OF EMBODIMENTS

The embodiments of this application are described in detail below with reference to the accompanying drawings of this specification.

It should be understood that in the embodiments of this application, a first device and a second device may be two physically independent physical devices, or may be two logically independent functional units, and the two functional units may be integrated into one physical device, or may be respectively integrated into two different physical devices. This is not limited in the embodiments of this application. For example, the first device may be a network slice management unit or a network slice subnet management unit; and the second device may be a network management unit or an element management unit.

In the embodiments of this application, the network slice management unit may also be referred to as a network slice management function, NSMF for short; the network slice subnet management unit may also be referred to as a network slice subnet management function, NSSMF for short; the network management unit may be referred to as a network management, NM for short; and the element management unit may be referred to as an element management, EM for short. It should be noted that in the embodiments of this application, the element management unit may be a domain management (domain management, DM), or may be used as a functional module of the DM. This is not limited in the embodiments of this application.

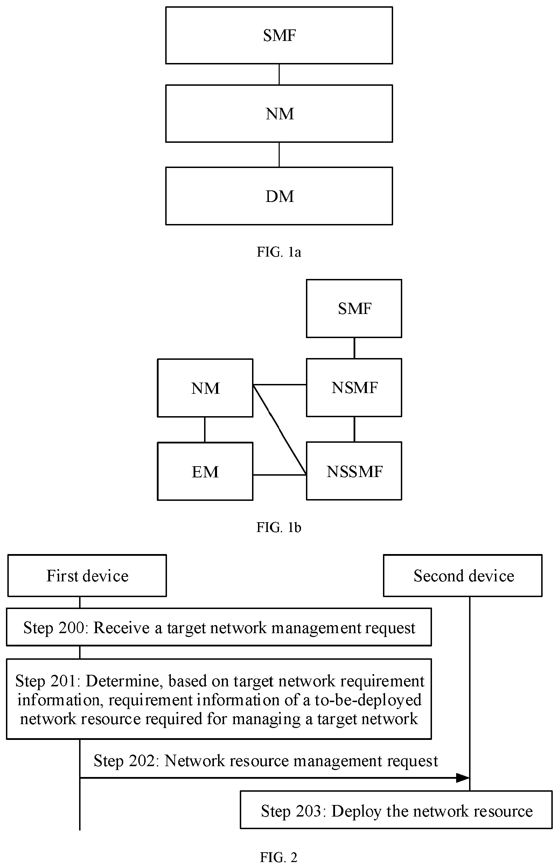

Specifically, the embodiments of this application may be applied to a communications architecture shown in FIG. 1a, or may be applied to a communications architecture shown in FIG. 1b. The communications architecture shown in FIG. 1a includes a service management function (service management function, SMF), a network management unit, and an element management unit; and a network slice management unit is used as a functional module in the network management unit, and a network slice subnet management unit is used as a functional module in the element management unit. The communications architecture shown in FIG. 1b includes an SMF, a network slice management unit, a network slice subnet management unit, a network management unit, and an element management unit. The network slice management unit, the network slice subnet management unit, the network management unit, and the element management unit are independent units.

The SMF is configured to: receive a service requirement of a related user, convert the service requirement into a network slice-related requirement, and perform service-related management. It should be noted that a name of the SMF is not limited in the embodiments of this application. For example, the SMF may also be referred to as a customer service management function (customer service management function, CSMF) or a communication service management function (communication service management function, CSMF). In addition, in the embodiments of this application, the SMF may be an independent management unit, or may be a function in any management unit (for example, a business support system (business support system, BSS), a service management unit, a service orchestration unit, or a service management and orchestration unit). It should be further noted that the SMF may be included in an operations support system (the office of strategic services, OSS), or may not be included in an OSS. In addition, in the embodiments of this application, the SMF may alternatively be a management or operation unit of the user.

In the communications architecture shown in FIG. 1a:
The network management unit includes one or both of an end-to-end network management function and an end-to-end network orchestration function. Specifically, the network management unit may have some or all of the following functions:
end-to-end network management (such as network lifecycle management, network template management, network fault management, network performance management, and network configuration management); mapping between an end-to-end network, a subnet, and a network function; coordination of network resources or sub-SLAs provided in different domains (such as an access network domain, a core network domain, and a transmission domain); decomposition of network requirement information into subnet requirement information; uniform orchestration of subnets provided in domains, so that the subnets provided in the different subdomains can satisfy a target service or network requirement (such as a service level agreement (service level agreement, SLA) requirement, a key performance indicator (key performance indicator, KPI) requirement, or a quality of service (quality of service, QoS) requirement); and management of end-to-end network resources (such as network functions, transmission resources, network elements, or air interface resources) (for example, deployment, configuration management, performance management, and fault management of the network resources).

In the embodiments of this application, an end-to-end network may also be referred to as a network slice or an end-to-end (end to end, E2E) network slice. Specifically, the end-to-end network includes at least a core network (core network, CN) part, an access network (access network, AN) part, and a transport network (transport network, TN) part; or the end-to-end network may include any two of a CN part, an AN part, and a TN part; or the end-to-end network may represent a network of a CN part, a network of an AN part, or a network of a TN part. In the embodiments of this application, the end-to-end network includes at least one network subnet. Logically, a network is a set of network functions. The network subnet herein may also be referred to as a network slice subnet.

It should be noted that a name of the network management unit is not limited in the embodiments of this application. For example, in the embodiments of this application, the network management unit may also be referred to as a cross-domain management unit, a cross-domain network slice management unit, a network slice management unit, or another name.

In the embodiments of this application, the network management unit may be an independent management unit, or may be a function in any management unit (for example, a network orchestration unit, a network management and orchestration unit, a service management unit, a service orchestration unit, a service management and orchestration unit, or a network functions virtualization orchestrator (Network function virtualization orchestrator, NFVO). In addition, it should be further noted that the network management unit may be included in an OSS, or may not be included in an OSS.

The domain management unit includes one or both of a subnet management function and an orchestration function. Specifically, the domain management unit may have some or all of the following functions:
domain management (including subnet lifecycle management (creation, update, and deletion), subnet fault management, subnet performance management, subnet configuration management, and the like); service management (including service lifecycle management, service fault management, service performance management, service configuration management, and the like); coordination of network resources (for example, network functions (network function, NF) or network elements (network element, NE); and management of intra-domain network resources (for example, network functions, transmission resources, network elements, or air interface resources) (for example, deployment, configuration management, performance management, and fault management of the network resources).

In this embodiment of this application, a subnet may include one or more of an AN part, a CN part, and a TN part. Specifically, in the embodiments of this application, the subnet may be considered as a network function or a network element. This is not limited.

When a subnet managed by the domain management unit includes only an AN part, the domain management unit may also be referred to as an AN DM. When a subnet managed by the domain management unit includes only a CN part, the domain management unit may also be referred to as a CN DM. When a subnet managed by the domain management unit includes an AN part and a CN part, the domain management unit may be referred to as a mixed domain management unit (mix DM).

It should be noted that a name of the domain management unit is not limited in the embodiments of this application. For example, the domain management unit in the embodiments of this application may also be referred to as a domain slice management unit, a network slice subnet management unit, or the like.

In the embodiments of this application, the domain management unit may be an independent management unit, or may be a function in any management unit (a network management unit, a network orchestration unit, a network management and orchestration unit, an element management unit, a network function management unit, a service management unit, a service orchestration unit, a domain management unit, a service management and orchestration unit, an NFVO, or the like). In addition, it should be further noted that the domain management unit may be included in an OSS, or may not be included in an OSS.

In the communications architecture shown in FIG. 1b:
The network slice management unit includes one or both of an end-to-end network management function and an end-to-end network orchestration function. Specifically, the network slice management unit may have some or all of the following functions:
end-to-end network management (such as network lifecycle management, network template management, network fault management, network performance management, and network configuration management); mapping between end-to-end networks, subnets, and network functions; coordination of network resources or sub-SLAs provided in different domains (such as an access network domain, a core network domain, and a transmission domain); decomposition of network requirement information into subnet requirement information; uniform orchestration of subnets provided in subdomains, so that network functions of the subnets provided in the different subdomains can satisfy a target service or network requirement (such as an SLA requirement, a KPI requirement, or a QoS requirement.

The network management unit has the following function:
management of end-to-end network resources (such as network functions, transmission resources, network elements, or air interface resources) (for example, deployment, configuration management, performance management, and fault management of the network resources).

The network slice subnet management unit includes one or both of a subnet management function and an orchestration function. Specifically, the network slice subnet management unit may have some or all of the following functions:
domain management (including subnet lifecycle management (creation, update, and deletion), subnet fault management, subnet performance management, subnet configuration management, and the like); service management (including service lifecycle management, service fault management, service performance management, service configuration management, and the like); and coordination of network resources (for example, NFs or NEs).

The element management unit has the following function:
management of intra-domain network resources (for example, network functions, transmission resources, network elements, or air interface resources) (for example, deployment, configuration management, performance management, and fault management of the network resources).

In the embodiments of this application, after determining requirement information of a to-be-deployed network resource, the first device may send a network resource management request to the second device to deploy the to-be-deployed network resource, so that on-demand deployment is implemented, thereby helping improve a possibility of successful target network deployment, and also helps improve network resource utilization.

As shown in FIG. 2, a network resource deployment method according to an embodiment of this application includes the following steps.

Step 200: A first device receives a target network management request, where the target network management request includes target network requirement information.

The target network requirement information includes one or more of a latency (latency) requirement, a bandwidth requirement, a coverage requirement, a user quantity requirement (a capacity requirement), a mobility requirement, a throughput requirement, a reliability requirement, a deployment location requirement, an affinity/anti-affinity requirement, a success rate requirement, a traffic model, a network slice type requirement, and the like. Specifically, the latency requirement is a requirement on a response time of a network or network component, the latency requirement may be that a maximum latency does not exceed a preset threshold, and the maximum latency is a maximum response time of the network or network component. For example, if the maximum latency of the network or network component is required to be 10 ms, the maximum response time of the network or network component is expected to be 10 ms. The bandwidth requirement may be used to describe a bandwidth that the network or network component is required to provide. For example, a minimum bandwidth of the network or network component is required to be 10 M. The coverage requirement is used to describe a network coverage area, such as the Shanghai area, used by the network or network component. The user quantity requirement is used to describe a maximum quantity of users that the network or network component is required to bear. For example, if it is predicted that the network or network component would be accessed by 1 million users before deployment, the user quantity requirement is that a user quantity is greater than or equal to 1 million. The mobility requirement is used to describe a movement status of a terminal device that accesses the network or network component, for example, whether the terminal device moves or is fixed. The mobility requirement may further describe a movement rate of the terminal device that accesses the network or network component. The affinity/anti-affinity requirement is a deployment location relationship requirement between the network or network component and another network or network component. The success rate is used to describe a success rate of using the network or network component by the terminal device, and may include a report success rate and a delivery success rate. The throughput requirement describes a data forwarding capability of the network or network component, for example, 100 Mbit/s, indicating that the network or network component supports transmitting data of 100 Mbit within one second. The reliability requirement is used to indicate a capability of the network or network component in performing a function thereof or duration in which the network or network component operates continuously. The network slice type may be divided based on functions. For example, a network slice type may be one of the following: enhanced mobile broadband (enhanced mobile broadband, eMBB), ultra-reliable and low-latency communication (ultra reliable and low latency communications, URLLC), and massive machine type communication (massive machine type communications, mMTC). The traffic model is used to describe a service use status of UE that accesses the network. For example, a data transmission period is that the UE transmits one packet every day, and a size of the packet is 1 M.

Step 201: The first device determines, based on the target network requirement information, requirement information of a to-be-deployed network resource required for managing a target network, where the requirement information of the to-be-deployed network resource includes at least one of air interface resource requirement information, user quantity requirement information, throughput requirement information, coverage requirement information, radio bearer (radio bearer, RB) requirement information, base station requirement information, network element device requirement information, and network function requirement information.

For example, the air interface resource requirement information is used to describe an air interface resource that needs to be provided by the target network or the network resource, an air interface represents an interface between a mobile phone or a wireless modem and a base station, and the air interface resource includes at least one of the following information: an uplink/downlink user plane cell throughput, an uplink/downlink control plane cell user quantity, uplink/downlink cell power, and a basic cell capability (such as a frequency channel number and a bandwidth). The user quantity requirement information is used to describe a quantity of users that need to be supported by the target network or the network resource for access, for example, 1 million users need to be supported in a particular area. The throughput requirement information is used to describe a throughput that needs to be provided by the target network or the network resource, and the throughput represents a capability of forwarding data between devices every second. The coverage requirement information is used to describe wireless coverage or a wireless coverage level required by the network or the network resource. For example, wireless coverage needs to be increased in a cell, or a coverage level of a cell needs to be improved. The RB requirement information is used to describe a quantity of radio bearers that need to be provided by the network or the network resource. The base station requirement information is used to describe a requirement of the target network on a base station, for example, a quantity of base stations that need to be deployed, a specification of the base station that needs to be deployed, a version of the base station that needs to be deployed, a performance indicator that needs to be satisfied by the base station that needs to be deployed, or a component (for example, a board) that needs to be added to an existing base station. The network element device requirement information is used to describe a requirement of the target network on a network device, and may be a quantity of network element devices that need to be deployed, a specification of the network element device that needs to be deployed, a version of the network element device that needs to be deployed, a performance indicator that needs to be satisfied by the network element device that needs to be deployed, a component (for example, a central processing unit (central processing unit, CPU)) that needs to be added to an existing device, or the like. The network function requirement information is used to describe requirement information of a network function required by the network, and may be a type of the network function (for example, an authentication management function (authentication management function, AMF), a session management function (session management function, SMF), or a policy management function (policy management function, PMF)), a quantity of network functions, a specification of the network function, or the like. This is not limited in this embodiment of this application.

Step 202: The first device sends a network resource management request to a second device, where the network resource management request includes requirement information of a to-be-deployed network resource.

Step 203: After receiving the network resource management request sent by the first device, the second device deploys the to-be-deployed network resource.

It should be noted that, when the second device deploys the to-be-deployed network resource, if the second device needs to deploy a device resource such as a base station, a gateway, a board, or a CPU, the second device sends a network resource deployment notification, and the network resource deployment notification is used to prompt operation and maintenance personnel to deploy a network resource. Specifically, in this embodiment of this application, the network resource deployment notification sent by the second device may be presented to the operation and maintenance personnel by using the second device. For example, a message indicating that a network resource needs to be deployed is presented, or a network resource that needs to be deployed may be directly prompted. In addition, in this embodiment of this application, the network resource deployment notification sent by the second device may alternatively prompt the operation and maintenance personnel by making a sound by using the second device. A specific implementation form of the network resource deployment notification is not limited in this embodiment of this application.

In addition, when the second device deploys the to-be-deployed network resource, for example, an air interface resource such as a frequency channel number, a cell, or an uplink/downlink control plane user quantity; or a transmission resource such as a bandwidth, the second device may correspondingly configure the to-be-deployed network resource based on the requirement information of the to-be-deployed network resource, or instruct another device to perform corresponding configuration. This is not limited in this embodiment of this application.

It should be noted that the target network in this embodiment of this application may be a network slice or a network slice subnet. This is not limited in this embodiment of this application. Specifically, in this embodiment of this application, network slices are communication resources ensuring that a bearer service can meet an SLA requirement. Hard isolation or soft isolation may be performed on the communication resources based on different requirements. The hard isolation is also referred to as physical isolation, and the soft isolation is also referred to as logical isolation. For example, the network slice in this embodiment of this application may be a complete logical network, and is a combination of network functions and resources required for completing a service. For example, the network slice may be a conventional network or a dedicated network. The network slice in this embodiment of this application may alternatively be a subnet, for example, a network slice subnet. This is not limited in this embodiment of this application.

Names of the target network management request and the network resource management request are not limited in this embodiment of this application. For example, the target network management request may also be referred to as a target network creation request, a target network deployment request, a target network instantiation request, a target network negotiation request, or the like; and the network resource management request may also be referred to as a network resource deployment request, a network resource creation request, a network resource instantiation request, or the like.

Specifically, to facilitate determining of the requirement information of the to-be-deployed network resource required for managing the target network, optionally, the first device determines, based on the target network requirement information, requirement information of one or more network resources required for managing the target network, and then determines the requirement information of the to-be-deployed network resource based on the requirement information of the one or more network resources required for managing the target network and instance information of a network resource already deployed in an existing network.

The requirement information of the one or more network resources required for managing the target network is used to indicate all network resources required for deploying the target network. The to-be-deployed network resource is used to indicate a network resource that is required for deploying the target network and that has not been deployed in the existing network. The instance information of the network resource already deployed in the existing network is used to indicate a status of the network resource already deployed in the existing network. Specifically, the network resource in this embodiment of this application may include an air interface resource (such as a frequency channel number, a cell, an uplink/downlink control plane user quantity, an uplink/downlink user plane cell RB, or uplink/downlink cell power), a device resource (such as a site, a network function instance, a network element, a board, a CPU, or a baseband device capability), a transmission resource (such as a common public radio interface (common public radio interface, CPRI) bandwidth, or a backhaul interface bandwidth), and the like. Specifically, a backhaul interface is an interface for communication between a base station and a core network. In addition, the network resource in this embodiment of this application may further include a logical resource, for example, a throughput, coverage, and a user quantity bearing capability that are required by a specific cell. For example, the network function instance is an AMF, a session management function, or the like; the network element is a public data network gateway (public data network gateway, PGW), an internet protocol multimedia subsystem (internet protocol multimedia subsystem, IMS), a serving gateway (serving gateway, SGW), a mobility management entity (mobility management entity, MME), or the like; and the baseband device capability is a baseband processing unit BBP or the like.

For example, when the target network requirement information includes a traffic model and a quantity of users, the first device may determine, based on the traffic model and the quantity of users, one or more base stations required for managing the target network and a quantity of RBs that need to be provided by each base station. The base stations required for managing the target network and the quantity of RBs that need to be provided by each base station are the requirement information of the one or more network resources required for managing the target network.

In this embodiment of this application, the first device may obtain, in the following manner, the instance information of the network resource already deployed in the existing network. Details are as follows:
The first device sends a network resource query request to the second device, and the network resource query request includes the requirement information of the one or more network resources required for managing the target network. Then, after receiving the network resource query request, the second device sends a network resource query result to the first device, and the network resource query result includes the instance information of the network resource already deployed in the existing network. After receiving the network resource query result sent by the second device, the first device obtains, from the network resource query result, the instance information of the network resource already deployed in the existing network.

It should be noted that names of the network resource query request and the network resource query result are not limited in this embodiment of this application. For example, the network resource query request may also be referred to as a resource query request or the like, and the network resource query result may be referred to as a network resource query response.

In addition, in this embodiment of this application, after receiving the network resource query request sent by the first device, the second device may alternatively first determine whether the network resource already deployed in the existing network satisfies the requirement information of the one or more network resources required for managing the target network. If determining that the deployed network resource cannot satisfy the requirement information of the one or more network resources required for managing the target network, the second device sends the network resource query result to the first device, where the network resource query result includes the instance information of the network resource already deployed in the existing network; or if determining that the deployed network resource can satisfy the requirement information of the one or more network resources required for managing the target network, the second device reserves a network resource that corresponds to the target network and that is in the existing network, allocates a resource identifier to the network resource corresponding to the target network, and then sends the network resource query result to the first device, where the network resource query result includes the resource identifier.

Duration in which the second device reserves the network resource that corresponds to the target network and that is in the existing network may be set based on an actual situation. This is not limited in this embodiment of this application.

It should be noted that, in this embodiment of this application, the instance information of the network resource already deployed in the existing network may include some or all of the following information, and is not limited to the following information:
a network resource identifier, a quantity of users supported by the network resource, a throughput supported by the network resource, coverage supported by the network resource, a capacity of the network resource, and a quantity of RBs supported by the network resource.

For example, when the target network requirement information includes a traffic model and a quantity of users, the first device may determine, based on the traffic model and the quantity of users, that X RBs are required for managing the target network is X. If M base stations are already deployed in a specified area in the existing network, and each base station can provide N RBs, a quantity of to-be-deployed base stations is (X-(M×N))/N, and a total quantity of to-be-deployed RBs is (X-(M×N)), where X, M, and N are positive integers greater than 0. When (X-(M×N)) is less than or equal to 0, an RB deployed in the existing network may satisfy the target network requirement information. When (X-(M×N)) is greater than 0, an RB deployed in the existing network cannot satisfy the target network requirement information.

In this embodiment of this application, to help the first device determine whether the network resource is successfully deployed, optionally, after performing step 203, the second device sends a network resource management notification to the first device. The network resource management notification includes at least one of indication information and instance information of the to-be-deployed network resource, and the indication information indicates whether the to-be-deployed network resource is successfully deployed.

It should be noted that the instance information of the to-be-deployed network resource may include information such as a to-be-deployed air interface resource, a to-be-deployed device resource, a to-be-deployed transmission resource, or a to-be-deployed logical resource, for example, a quantity of to-be-deployed base stations, a quantity of to-be-deployed RBs, or a throughput or coverage supported by the to-be-deployed network resource.

After receiving the network resource management notification sent by the second device, if determining that the to-be-deployed network resource is successfully deployed, the first device manages the target network; or if determining that the to-be-deployed network resource fails to be deployed, the first device returns a target network management request failure.

That the first device manages the target network may include, for example, forming the target network by using deployed network resources; or configuring the to-be-deployed network resource that has been deployed and a network resource that is required for deploying the target network and that is in the existing network.

It should be noted that the existing network in the embodiments of this application may be a mobile communications system such as a next radio (next radio, NR) system, a long term evolution (long term evolution, LTE) system, a long term evolution-advanced (long term evolution advanced, LTE-A) system, or an enhanced long term evolution (enhanced long term evolution-advanced, eLTE) system; or may be a cellular system related to wireless fidelity (wireless fidelity, WiFi), worldwide interoperability for microwave access (worldwide interoperability for microwave access, WiMax), the 3rd generation partnership project (3rd generation partnership project, 3GPP), or the like. This is not limited in the embodiments of this application.

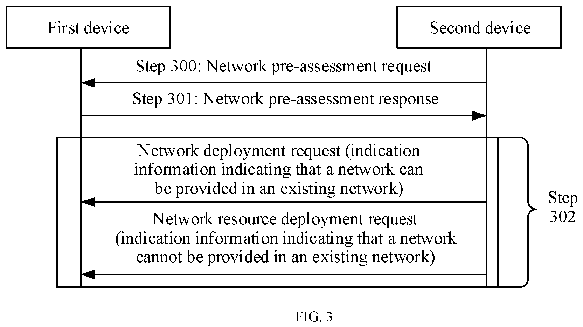

In a process of automatically deploying a network slice, there may be a case in which a network resource already deployed in an existing network cannot satisfy a requirement of deploying the network slice. In this embodiment of this application, the network resource may further be assessed before the network slice is deployed. Specifically, as shown in FIG. 3, a network resource assessment method according to an embodiment of this application includes the following steps.

Step 300: A second device sends a network pre-assessment request to a first device, where the network pre-assessment request includes network requirement information, and the network requirement information indicates a requirement satisfied by a network that needs to be deployed.

It should be noted that, in this embodiment of this application, the requirement satisfied by the network that needs to be deployed may include a service type, a latency, a throughput, a bandwidth, a quantity of users, user distribution, a user traffic model (for example, a data transmission period), a coverage area, and the like of the network. This is not limited in this embodiment of this application. It should be noted that the data transmission period is a data transmission period. For example, if a terminal device transmits data by using a network slice every N seconds, a data transmission period of the terminal device is N seconds, where N is a positive integer greater than 0.

Step 301: After receiving the network pre-assessment request sent by the second device, the first device determines whether the network can be provided in an existing network, and then sends a network pre-assessment response to the second device, where the network pre-assessment response includes indication information, and the indication information indicates whether the network can be provided in the existing network.

In this embodiment of this application, optionally, after step 301 is performed, step 302 is performed.

Specifically, in step 302, after receiving the network pre-assessment response sent by the first device, if determining that the indication information indicates that the network can be provided in the existing network, the second device sends a network deployment request to the first device; or if determining that the indication information indicates that the network cannot be provided in the existing network, the second device sends a network resource deployment request to the first device.

It should be noted that names of the network pre-assessment request and the network pre-assessment response are not limited in this embodiment of this application. For example, the network assessment request may also be referred to as a network slice pre-assessment request, a network slice subnet pre-assessment request, or the like.

In this embodiment of this application, if the indication information indicates that the network cannot be provided in the existing network, optionally, the network pre-assessment response may further include requirement information of a to-be-deployed network resource; and the requirement information of the to-be-deployed network resource includes at least one of air interface resource requirement information, user quantity requirement information, throughput requirement information, coverage requirement information, RB requirement information, base station requirement information, network element device requirement information, network function requirement information, and the like.

It should be noted that, the to-be-deployed network resource is a network resource that is not deployed in the existing network and that is required for deploying the network.

In this embodiment of this application, if the indication information indicates that the network can be provided in the existing network, after receiving the network pre-assessment response sent by the first device, the second device sends the network deployment request to the first device. The network deployment request is used to instruct to deploy the network.

Specifically, to facilitate deployment of the network, optionally, if determining that the network can be provided in the existing network, the first device reserves a network resource corresponding to the network in the existing network, allocates a network resource identifier to the network resource, and then sends the network pre-assessment response to the second device. The network pre-assessment response includes the network resource identifier, and the network resource identifier is used to identify the network resource corresponding to the network in the existing network.

To help the first device deploy the network, optionally, the network deployment request sent by the second device to the first device includes the network resource identifier.

It should be noted that, for a specific network that can be used as the existing network in this embodiment of this application, refer to an implementation of the existing network in the network resource deployment method shown in FIG. 2 in the embodiments of this application.

To facilitate understanding of the technical solutions in the embodiments of this application, this embodiment of this application may be applied to a network slice creation process. Specifically, the communications architecture shown in FIG. 1b is used as an example for detailed description.

### Embodiment 1

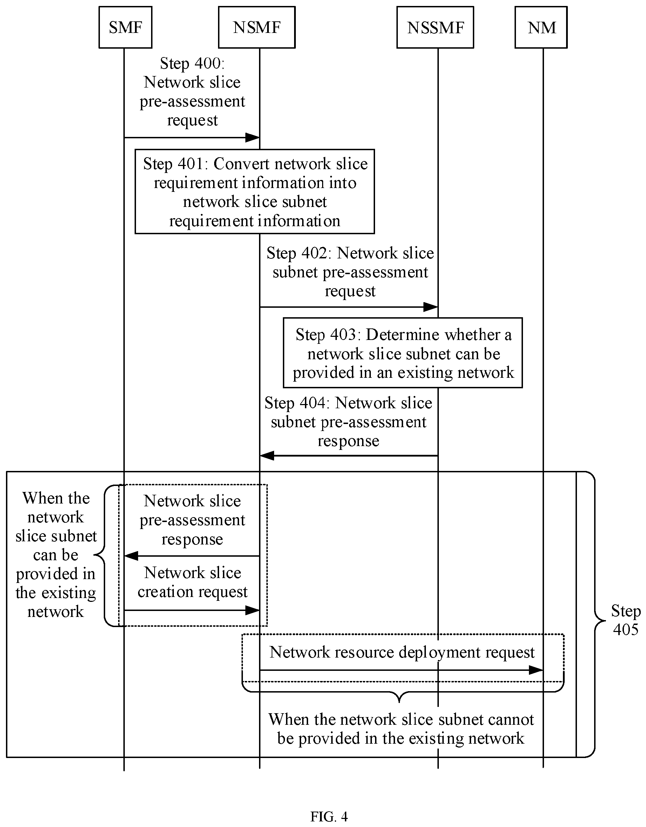

As shown in FIG. 4, a network slice assessment method according to an embodiment of this application includes the following steps.

Step 400: If an SMF needs to create a network slice to carry a service, the SMF sends a network slice pre-assessment request to an NSMF, where the network slice pre-assessment request includes network slice requirement information, and the network slice requirement information indicates a requirement satisfied by a network slice that needs to be deployed, for example, a requirement on a service/network slice type, a latency, a throughput, a bandwidth, a quantity of users, user distribution, a user traffic model (for example, a data transmission period), or a coverage area.

Step 401: After receiving the network slice pre-assessment request sent by the SMF, the NSMF converts the network slice requirement information into network slice subnet requirement information, where the network slice subnet requirement information indicates a requirement satisfied by a subnet of the network slice that needs to be deployed.

Step 402: The NSMF sends a network slice subnet pre-assessment request to the NSSMF, where the network slice subnet pre-assessment request includes the network slice subnet requirement information.

Step 403: After receiving the network slice subnet requirement information sent by the NSMF, the NSSMF determines whether the network slice subnet can be provided in an existing network.

Specifically, in this embodiment of this application, an optional specific implementation in which the NSSMF determines whether the network slice subnet can be provided in the existing network is as follows: The NSSMF may convert the network slice subnet requirement information into network resource requirement information. The network resource requirement information is used to indicate a network resource required for creating the network slice subnet. Then, the NSSMF determines whether a network resource already deployed in the existing network satisfies the network resource required for creating the network slice subnet. The network resource includes an air interface resource (for example, a frequency channel number, an uplink/downlink control plane cell user quantity, an uplink/downlink user plane cell PRB, or uplink/downlink cell power), a device resource (for example, a site, a network function instance, a network element, a board, a CPU, or a baseband device capability), and a transmission resource (for example, a CPRI interface bandwidth or a backhaul interface bandwidth). In addition, the network resource further includes a logical resource, for example, a throughput, coverage, and a user quantity bearing capability that are required by a specific cell.

For example, if a quantity of base stations already deployed in a specified area in the existing network is M, and a quantity of RBs that can be provided by each base station is N, a total quantity of RBs that can be provided in the existing network is M×N. It is assumed that a total quantity of RBs required for deploying the network slice subnet that is obtained through calculation based on a traffic model and a quantity of users that are included in the network resource requirement information is X; and if M×N is greater than or equal to X, the network resource already deployed in the existing network can satisfy the network resource required for deploying the network slice subnet; or if M×N is less than X, the network resource already deployed in the existing network cannot satisfy the network resource required for deploying the network slice subnet. For example, if each base station in the deployed network slice subnet can also provide N RBs, a quantity of to-be-deployed base stations is (X-(M×N))/N, where X, M, and N are positive integers greater than 0.

Another optional specific implementation is that whether the network slice subnet can be provided in one or more network slice subnets already deployed in the existing network is directly determined without converting the network slice subnet requirement information into the network resource requirement information.

It should be noted that an algorithm for determining whether the network slice subnet can be provided in the existing network may be preconfigured in the NSSMF.

Step 404: The NSSMF sends a network slice subnet pre-assessment response to the NSMF.

The network slice subnet pre-assessment response includes indication information, and the indication information indicates whether the network slice subnet can be provided in the existing network.

Specifically, if the indication information indicates that the network slice subnet can be provided in the existing network, the NSSMF reserves a network resource corresponding to the network slice subnet in the existing network; then allocates a network resource identifier that is used to identify the network resource corresponding to the network slice subnet in the existing network; and adds the network resource identifier to the network slice subnet pre-assessment response sent to the NSMF.

If the indication information indicates that the network slice subnet cannot be provided in the existing network, optionally, a reason why a network slice resource cannot be provided may further be added to the network slice subnet pre-assessment response, for example, a new physical site needs to be deployed, a board of a deployed physical site needs to be added, or a user quantity bearing capability or coverage of a specific cell needs to be increased.

Step 405: After receiving the network slice subnet pre-assessment response sent by the NSSMF, the NSMF performs the following operations:
If determining that the network slice subnet can be provided in the existing network, the NSMF sends a network slice pre-assessment response to the SMF. The network slice pre-assessment response is used to indicate that the network slice can be provided in the existing network. After receiving the network slice pre-assessment response, the SMF sends a network slice creation request to the NSMF. Optionally, the network slice creation request includes the network resource identifier in step 404, and the network resource identifier may be sent to the SMF by using the network slice pre-assessment response.

If the NSMF determines that the network slice subnet cannot be provided in the existing network, an optional manner is as follows: The NSMF adjusts a conversion manner of converting the network slice requirement information into the network slice subnet requirement information, converts the network slice requirement information into the network slice subnet requirement information in the adjusted conversion manner, and then performs step 402 to step 404 again. Another optional manner is as follows: The NSMF sends the network slice pre-assessment response to the SMF, where the network slice pre-assessment response is used to indicate that the network slice cannot be provided in the existing network, and then the SMF determines whether to adjust the network slice requirement information. Still another optional manner is as follows: The NSMF sends a network resource deployment request to an NM, where the network resource deployment request includes requirement information of a to-be-deployed network resource; and the NM deploys and configures the to-be-deployed network resource. Specifically, the NM instructs operation and maintenance personnel to deploy the network resource, and instructs an EM to configure the network resource. FIG. 4 shows only this optional manner, and other optional manners are not shown in the accompanying drawings.

In this embodiment of this application, the NSSMF is equivalent to the first device in the network resource assessment method shown in FIG. 3 in the embodiment of this application, and the NSMF is equivalent to the second device in the network resource assessment method shown in FIG. 3 in the embodiment of this application.

### Embodiment 2

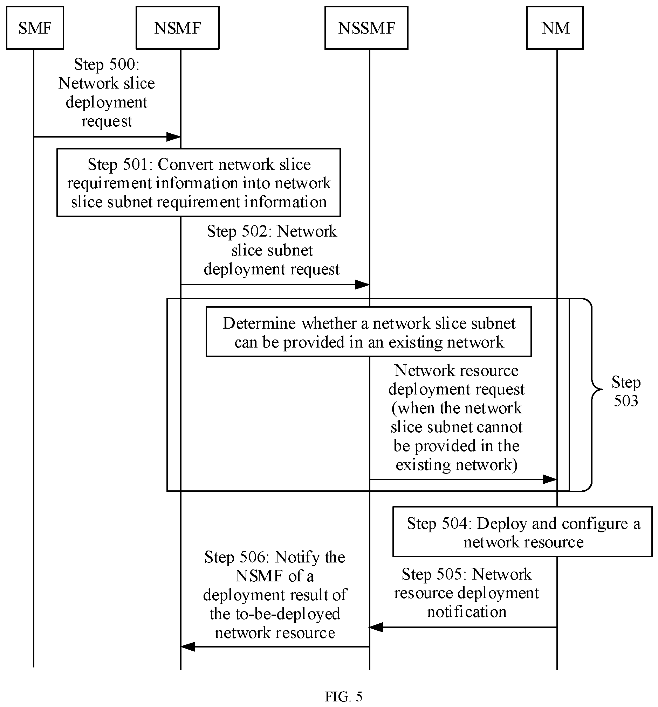

As shown in FIG. 5, a network slice deployment method according to an embodiment of this application includes the following steps.

Step 500: If an SMF needs to create a network slice to carry a service, the SMF sends a network slice deployment request to an NSMF, where the network slice deployment request includes network slice requirement information, and the network slice requirement information indicates a requirement satisfied by a network slice that needs to be deployed, for example, a requirement on a service/network slice type, a latency, a throughput, a bandwidth, a quantity of users, user distribution, a user traffic model (for example, a data transmission period), or a coverage area.

Step 501: After receiving the network slice deployment request sent by the SMF, the NSMF converts the network slice requirement information into network slice subnet requirement information, where the network slice subnet requirement information indicates a requirement satisfied by a subnet of the network slice that needs to be deployed.

Step 502: The NSMF sends a network slice subnet deployment request to an NSSMF, where the network slice subnet deployment request includes the network slice subnet requirement information.

Step 503: After receiving the network slice subnet deployment request sent by the NSMF, the NSSMF determines whether the network slice subnet can be provided in an existing network. A determining manner may be similar to that in step 403, and details are not described herein again.

If determining that the network slice subnet cannot be provided in the existing network, the NSSMF determines requirement information of a to-be-deployed network resource based on the network slice subnet requirement information. The requirement information of the to-be-deployed network resource includes at least one of air interface resource requirement information, user quantity requirement information, throughput requirement information, coverage requirement information, radio bearer RB requirement information, base station requirement information, network element device requirement information, and network function requirement information. Then, the NSSMF sends a network resource deployment request to an NM. The network resource deployment request includes the requirement information of the to-be-deployed network resource, for example, a network resource needs to be newly added, for example, a new physical site needs to be deployed, a board of a deployed physical site needs to be added, or a user quantity bearing capability or coverage of a specific cell needs to be increased.

Step 504: After receiving the network resource deployment request sent by the NSSMF, the NM deploys and configures the network resource based on the requirement information of the to-be-deployed network resource. Specifically, an implementation of deploying and configuring the network resource by the NM may be as follows:
The NM instructs corresponding operation and maintenance personnel to deploy the to-be-deployed network resource, and requests an EM to configure the to-be-deployed network resource. Alternatively, the NM sends the network resource deployment request to an EM, and the EM deploys and configures the to-be-deployed network resource.

Step 505: After determining that the to-be-deployed network resource is successfully deployed and configured, the NM reserves the network resource; allocates a network resource identifier to the network resource, to uniquely identify the network resource, and sends a network resource deployment notification to the NSSMF, where the network resource deployment notification includes the network resource identifier and indication information, and the indication information is used to indicate that the to-be-deployed network resource is successfully deployed.

Step 506: After receiving the network resource deployment notification, the NSSMF notifies the NSMF of a deployment result of the to-be-deployed network resource.

In this embodiment of this application, the NSSMF is equivalent to the first device in the network resource deployment method shown in FIG. 2 in the embodiment of this application, and the NM is equivalent to the second device in the network resource assessment method shown in FIG. 2 in the embodiment of this application.

Introduction of a network resource deployment operation between the NSSMF and the NM helps increase a speed of deploying a network resource by the NSSMF in a network slice deployment process.

### Embodiment 3

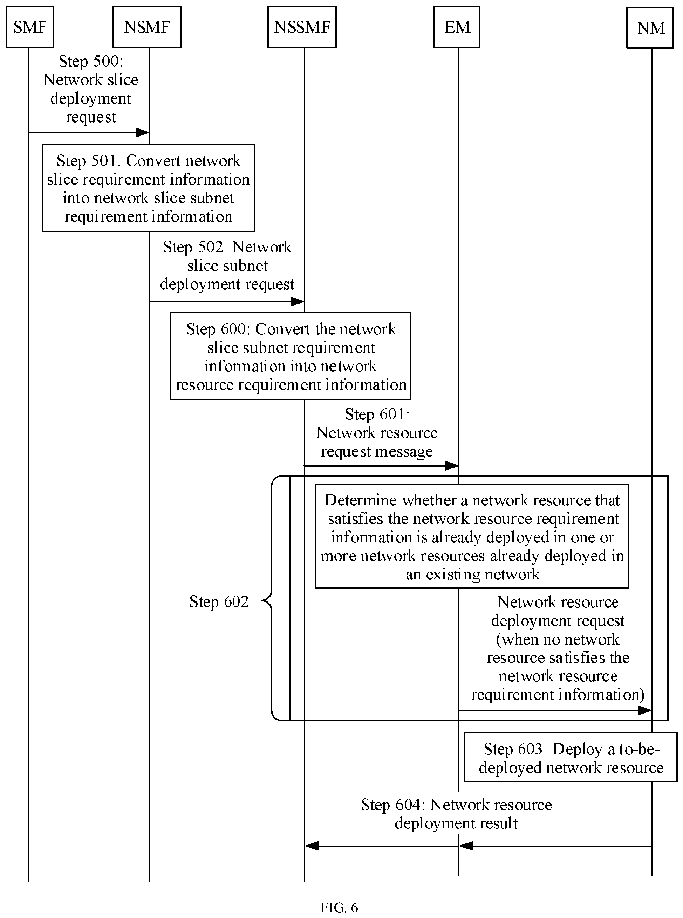

As shown in FIG. 6, a network resource deployment method according to an embodiment of this application includes the following steps.

After step 500 to step 502 are performed, step 600 to step 604 are performed.

Step 600: After receiving the network slice subnet deployment request sent by the NSMF, the NSSMF converts the network slice subnet requirement information into network resource requirement information, where the network resource includes an air interface resource (for example, a frequency channel number, an uplink/downlink control plane cell user quantity, an uplink/downlink cell user plane PRB, or uplink/downlink cell power), a device resource (for example, a site, a network function instance, a network element, a board, a CPU, or a baseband device capability), and a transmission resource (for example, a CPRI interface bandwidth or a backhaul interface bandwidth); in addition, the network resource further includes a logical resource, for example, a throughput, coverage, and a user quantity bearing capability that are required by a specific cell.

Step 601: The NSSMF sends a network resource request message to an EM, where the network resource request message includes the network resource requirement information.

Step 602: After receiving the network resource request message, the EM determines, based on the network resource requirement information, whether a network resource that satisfies the network resource requirement information is already deployed in one or more network resources already deployed in the existing network; and if the EM determines that the one or more network resources already deployed in the existing network include only some network resources or no network resource satisfying the network resource requirement information, an optional implementation is that the EM sends a network resource deployment request to an NM, where the network resource deployment request includes requirement information of a to-be-deployed network resource; and then step 603 and step 604 are performed; and another optional implementation is that the EM deploys the to-be-deployed network resource, and then returns a network resource deployment result to the NSSMF.

Step 603: After receiving the network resource deployment request sent by the EM, the NM deploys the to-be-deployed network resource.

Step 604: The NM returns the network resource deployment result to the NSSMF by using the EM.

In this embodiment of this application, the EM is equivalent to the first device in the network resource deployment method shown in FIG. 2 in the embodiment of this application, and the NM is equivalent to the second device in the network resource assessment method shown in FIG. 2 in the embodiment of this application.

Deployment of the network resource in this embodiment of this application is implemented by the EM, so that a function of the NSSMF is simplified, and centralized management of the network resource is facilitated.

### Embodiment 4

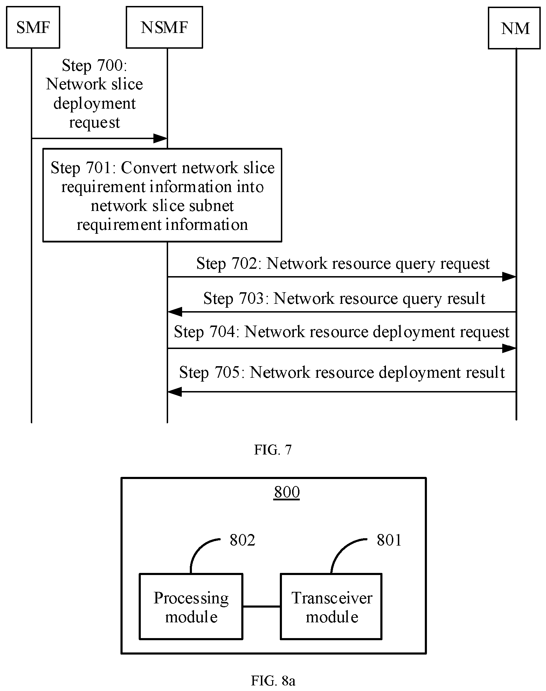

As shown in FIG. 7, a network resource deployment method according to an embodiment of this application includes the following steps.

Step 700: If an SMF needs to create a network slice to carry a service, the SMF sends a network slice deployment request to an NSMF, where the network slice deployment request includes network slice requirement information, and the network slice requirement information indicates a requirement satisfied by a network slice that needs to be deployed, for example, a requirement on a service/network slice type, a latency, a throughput, a bandwidth, a quantity of users, user distribution, a user traffic model (for example, a data transmission period), or a coverage area.

Step 701: After receiving the network slice deployment request sent by the SMF, the NSMF converts the network slice requirement information into network resource requirement information. Specifically, the NSMF may directly convert the network slice requirement information into the network resource requirement information based on a locally preset algorithm; or the NSMF may convert the network slice requirement information into the network slice subnet requirement information and then send the network slice subnet requirement information to an NSSMF, after converting the network slice subnet requirement information into the network resource requirement information, the NSSMF returns the network resource requirement information to the NSMF.

Step 702: The NSMF sends a network resource query request to an NM, where the network resource query request includes the network resource requirement information.

Step 703: After receiving the network resource query request sent by the NSMF, the NM queries whether a network resource that satisfies the network resource requirement information can be provided in one or more network resources already deployed in an existing network, and then sends a network resource query result to the NSMF.

Step 704: After receiving the network resource query result sent by the NM, if determining that the network resource that satisfies the network resource requirement information cannot be provided in the one or more network resources already deployed in the existing network, the NSMF sends a network resource deployment request to the NM, where the network resource deployment request includes requirement information of a to-be-deployed network resource.

Step 705: After receiving the network resource deployment request, the NM deploys the to-be-deployed network resource, and then returns a network resource deployment result to the NSMF.

In addition, when determining that the network resource that satisfies the network resource requirement information can be provided in the one or more network resources already deployed in the existing network, the NSMF sends a network slice creation request to the NM.

This embodiment of this application helps simplify a procedure of deploying the network resource.

In this embodiment of this application, the NSMF is equivalent to the first device in the network resource deployment method shown in FIG. 2 in the embodiment of this application, and the NM is equivalent to the second device in the network resource assessment method shown in FIG. 2 in the embodiment of this application.

Based on a same concept, an embodiment of this application further provides a first device for network resource deployment. The first device is configured to perform an action or a function of the first device in the network resource deployment method shown in FIG. 2.

Based on a same concept, an embodiment of this application further provides a first device for network resource assessment. The first device is configured to perform an action or a function of the first device in the network resource assessment method shown in FIG. 3.

In addition, an embodiment of this application further provides a communications system.

For brevity, for content of an apparatus part, specifically refer to the method embodiments, and repetitions are not provided again.

As shown in FIG. 8a, a first device 800 for network resource deployment according to an embodiment of this application includes a transceiver module 801 and a processing module 802. The transceiver module 801 is configured to receive a target network management request, and the target network management request includes target network requirement information. The processing module 802 is configured to determine, based on the target network requirement information, requirement information of a to-be-deployed network resource required for managing a target network; and the requirement information of the to-be-deployed network resource includes at least one of air interface resource requirement information, user quantity requirement information, throughput requirement information, coverage requirement information, radio bearer RB requirement information, base station requirement information, network element device requirement information, and network function requirement information. The transceiver module 801 is further configured to send a network resource management request to a second device, and the network resource management request includes the requirement information of the to-be-deployed network resource.

Optionally, the processing module 802 is specifically configured to: determine, based on the target network requirement information, requirement information of one or more network resources required for managing the target network; and determine the requirement information of the to-be-deployed network resource based on the requirement information of the one or more network resources required for managing the target network and instance information of a network resource already deployed in an existing network.

Optionally, the transceiver module 801 is further configured to: send a network resource query request to the second device, where the network resource query request includes the requirement information of the one or more network resources required for managing the target network; and receive a network resource query result sent by the second device, where the network resource query result includes the instance information of the network resource already deployed in the existing network.

Optionally, the transceiver module 801 is further configured to receive a network resource management notification sent by the second device, and the network resource management notification includes at least one of indication information and instance information of the to-be-deployed network resource, and the indication information indicates whether the to-be-deployed network resource is successfully deployed. The processing module 802 is further configured to: if determining that the to-be-deployed network resource is successfully deployed, manage the target network; or if determining that the to-be-deployed network resource fails to be deployed, return a target network management request failure.

Optionally, the instance information of the network resource already deployed in the existing network includes at least one of a network resource identifier, a quantity of users supported by the network resource, a throughput supported by the network resource, coverage supported by the network resource, a capacity of the network resource, and a quantity of RBs supported by the network resource.

Optionally, the first device is a network slice management unit or a network slice subnet management unit; and the second device is a network management unit or an element management unit.

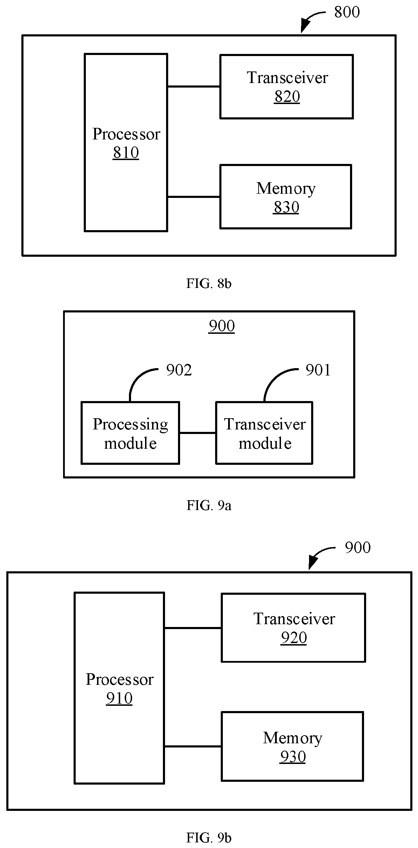

Specifically, a schematic diagram of a hardware structure of the first device 800 according to this embodiment of this application is shown in FIG. 8b, and the first device 800 includes a processor 810, a transceiver 820, and a memory 830. It should be noted that the processing module 802 corresponds to the processor 810 in the hardware structure of the first device 800, and the transceiver module 801 corresponds to the transceiver 820 in the hardware structure of the first device 800. The transceiver 820 includes a receiver and a transmitter. The memory 830 may be configured to store a program/code pre-installed when the first device 800 is delivered from a factory, or may store code executed by the processor 810, or the like.

The processor 810 may be a general-purpose CPU, a microprocessor, an application-specific integrated circuit (application specific integrated Circuit, ASIC), or one or more integrated circuits, and is configured to perform a related operation, to implement the technical solutions provided in the embodiments of this application.

It should be noted that, although only the processor 810, the transceiver 820, and the memory 830 are shown in the hardware structure of the first device 800 shown in FIG. 8b, in a specific implementation process, persons skilled in the art should understand that the first device 800 further includes another component essential for implementing normal running. In addition, based on a specific requirement, persons skilled in the art should understand that the first device 800 may further include hardware components for implementing other additional functions. In addition, persons skilled in the art should understand that the first device 800 may include only components or modules essential for implementing the embodiments of this application, but not necessarily include all the components shown in FIG. 8b.

A person of ordinary skill in the art may understand that all or some of the procedures of the methods in the foregoing embodiments may be implemented by a computer program instructing relevant hardware. The program may be stored in a computer-readable storage medium. When the program is executed, the procedures of the methods in the embodiments may be performed. The foregoing storage medium may be a magnetic disk, an optical disc, a read-only memory (read-only memory, ROM), a random access memory (random access memory, RAM), or the like.

As shown in FIG. 9a, a second device 900 for network resource deployment according to an embodiment of this application includes a processing module 902 and a transceiver module 901. The transceiver module 901 is configured to receive a network resource management request sent by a first device. The processing module 902 is configured to deploy a to-be-deployed network resource after the transceiver module 901 receives the network resource management request sent by the first device. The network resource management request includes requirement information of the to-be-deployed network resource; and the requirement information of the to-be-deployed network resource includes at least one of air interface resource requirement information, user quantity requirement information, throughput requirement information, coverage requirement information, radio bearer requirement information, base station requirement information, network element device requirement information, and network function requirement information.

Optionally, the transceiver module 901 is further configured to send a network resource management notification to the first device, and the network resource management notification includes at least one of indication information and instance information of the to-be-deployed network resource, and the indication information indicates whether the to-be-deployed network resource is successfully deployed.

In addition, in a possible design, the transceiver module 901 is further configured to: after receiving a network resource query request sent by the first device, send a network resource query result to the first device. The network resource query request includes requirement information of one or more network resources required for managing a target network; and the network resource query result includes instance information of a network resource already deployed in an existing network.

Specifically, a schematic diagram of a hardware structure of the second device 900 according to this embodiment of this application is shown in FIG. 9b, and the second device 900 includes a processor 910, a transceiver 920, and a memory 930. It should be noted that the processing module 902 corresponds to the processor 910 in the hardware structure of the second device 900, and the transceiver module 901 corresponds to the transceiver 920 in the hardware structure of the second device 900. The transceiver 920 includes a receiver and a transmitter. The memory 930 may be configured to store a program/code pre-installed when the second device 900 is delivered from a factory, or may store code executed by the processor 910, or the like.

The processor 910 may be a general-purpose CPU, a microprocessor, an ASIC, or one or more integrated circuits, and is configured to perform a related operation, to implement the technical solutions provided in the embodiments of this application.

It should be noted that, although only the processor 910, the transceiver 920, and the memory 930 are shown in the hardware structure of the second device 900 shown in FIG. 9b, in a specific implementation process, persons skilled in the art should understand that the second device 900 further includes another component essential for implementing normal running. In addition, based on a specific requirement, persons skilled in the art should understand that the second device 900 may further include hardware components for implementing other additional functions. In addition, persons skilled in the art should understand that the second device 900 may include only components or modules essential for implementing the embodiments of this application, but not necessarily include all the components shown in FIG. 9b.

A person of ordinary skill in the art may understand that all or some of the procedures of the methods in the foregoing embodiments may be implemented by a computer program instructing relevant hardware. The program may be stored in a computer-readable storage medium. When the program is executed, the procedures of the methods in the embodiments may be performed. The storage medium may be a magnetic disk, an optical disk, a ROM, a RAM, or the like.

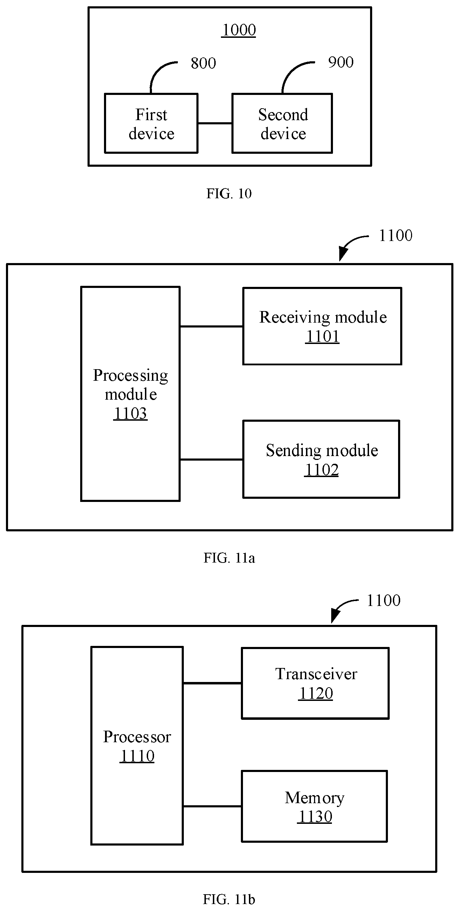

As shown in FIG. 10, a communications system 1000 according to an embodiment of this application includes the first device 800 and the second device 900.

As shown in FIG. 11a, a first device 1100 for network resource assessment according to an embodiment of this application includes a receiving module 1101 and a sending module 1102. The receiving module 1101 is configured to receive a network pre-assessment request sent by a second device, the network pre-assessment request includes network requirement information, and the network requirement information indicates a requirement satisfied by a network that needs to be deployed. The sending module 1102 is configured to send a network pre-assessment response to the second device, the network pre-assessment response includes indication information, and the indication information indicates whether the network can be provided in an existing network.

Optionally, the network pre-assessment response further includes requirement information of a to-be-deployed network resource; and the requirement information of the to-be-deployed network resource includes at least one of air interface resource requirement information, user quantity requirement information, throughput requirement information, coverage requirement information, radio bearer RB requirement information, base station requirement information, network element device requirement information, and network function requirement information.

Optionally, if the indication information indicates that the network can be provided in the existing network, the receiving module 1101 is further configured to: after the sending module 1102 sends the network pre-assessment response to the second device, receive a network deployment request sent by the second device, and the network deployment request is used to instruct to deploy the network.

Optionally, a processing module 1103 in the first device is configured to: before the sending module 1102 sends the network pre-assessment response to the second device, if determining that the network can be provided in the existing network, reserve a network resource corresponding to the network in the existing network.

Optionally, the network pre-assessment response further includes a network resource identifier, and the network resource identifier is used to identify the network resource corresponding to the network in the existing network.

Optionally, the network deployment request includes the network resource identifier.

Specifically, a schematic diagram of a hardware structure of the first device 1100 according to this embodiment of this application is shown in FIG. 11b, and the first device 1100 includes a processor 1110, a transceiver 1120, and a memory 1130. It should be noted that the processing module 1103 corresponds to the processor 1110 in the hardware structure of the first device 1100, and the receiving module 1101 and the sending module 1102 correspond to the transceiver 1120 in the hardware structure of the first device 1100. The transceiver 1120 includes a receiver and a transmitter. The receiving module 1101 corresponds to the receiver, and the sending module 1102 corresponds to the transmitter. The memory 1130 may be configured to store a program/code pre-installed when the first device 1100 is delivered from a factory, or may store code executed by the processor 1110, or the like.

The processor 1110 may be a general-purpose CPU, a microprocessor, an ASIC, or one or more integrated circuits, and is configured to perform a related operation, to implement the technical solutions provided in the embodiments of this application.

It should be noted that, although only the processor 1110, the transceiver 1120, and the memory 1130 are shown in the hardware structure of the first device 100 shown in FIG. 11b, in a specific implementation process, persons skilled in the art should understand that the first device 1100 further includes another component essential for implementing normal running. In addition, based on a specific requirement, persons skilled in the art should understand that the first device 1100 may further include hardware components for implementing other additional functions. In addition, persons skilled in the art should understand that the first device 1100 may include only components or modules essential for implementing the embodiments of this application, but not necessarily include all the components shown in FIG. 11b.

A person of ordinary skill in the art may understand that all or some of the procedures of the methods in the foregoing embodiments may be implemented by a computer program instructing relevant hardware. The program may be stored in a computer-readable storage medium. When the program is executed, the procedures of the methods in the embodiments may be performed. The storage medium may be a magnetic disk, an optical disk, a ROM, a RAM, or the like.

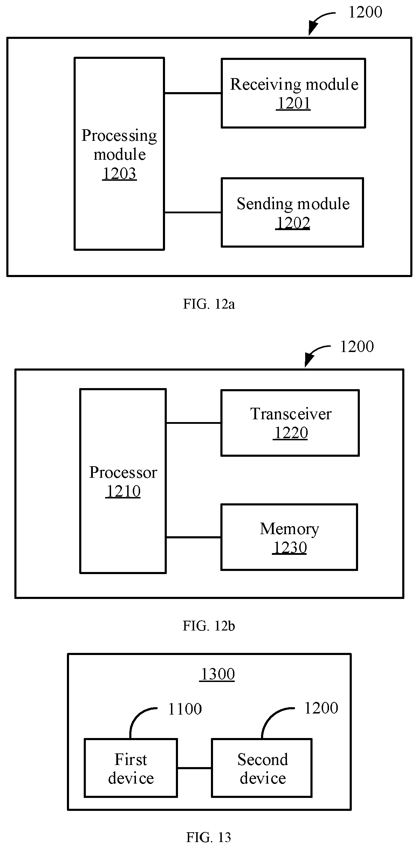

As shown in FIG. 12a, a second device 1200 for network resource assessment according to an embodiment of this application includes a sending module 1202 and a receiving module 1201. The sending module 1202 is configured to send a network pre-assessment request to a first device. The receiving module 1201 is configured to: after the sending module 1202 sends the network pre-assessment request to the first device, receive a network pre-assessment response sent by the first network device. The network pre-assessment request includes network requirement information, and the network requirement information indicates a requirement satisfied by a network that needs to be deployed. The network pre-assessment response includes indication information, and the indication information indicates whether the network can be provided in an existing network.

Optionally, a processing module 1203 in the second device is further configured to: after the receiving module 1201 receives the network pre-assessment response sent by the first device, if determining that the indication information indicates that the network can be provided in the existing network, trigger the sending module 1202 to send a network deployment request to the first device; or if determining that the indication information indicates that the network cannot be provided in the existing network, trigger the sending module 1202 to send a network resource deployment request to the first device.

Optionally, the network pre-assessment response further includes requirement information of a to-be-deployed network resource; and the requirement information of the to-be-deployed network resource includes at least one of air interface resource requirement information, user quantity requirement information, throughput requirement information, coverage requirement information, radio bearer RB requirement information, base station requirement information, network element device requirement information, and network function requirement information. According to the foregoing technical solution, the second device can obtain the requirement information of the to-be-deployed network resource, thereby facilitating subsequent deployment of the to-be-deployed network resource.

Specifically, a schematic diagram of a hardware structure of the second device 1200 according to this embodiment of this application is shown in FIG. 12b, and the second device 1200 includes a processor 1210, a transceiver 1220, and a memory 1230. It should be noted that the processing module 1203 corresponds to the processor 1210 in the hardware structure of the second device 1200, and the receiving module 1201 and the sending module 1202 correspond to the transceiver 1220 in the hardware structure of the second device 1200. The transceiver 1220 includes a receiver and a transmitter. The receiving module 1201 corresponds to the receiver, and the sending module 1202 corresponds to the transmitter. The memory 1230 may be configured to store a program/code pre-installed when the second device 1200 is delivered from a factory, or may store code executed by the processor 1210, or the like.

The processor 1210 may be a general-purpose CPU, a microprocessor, an ASIC, or one or more integrated circuits, and is configured to perform a related operation, to implement the technical solutions provided in the embodiments of this application.

It should be noted that, although only the processor 1210, the transceiver 1220, and the memory 1230 are shown in the hardware structure of the second device 1200 shown in FIG. 12b, in a specific implementation process, persons skilled in the art should understand that the second device 1200 further includes another component essential for implementing normal running. In addition, based on a specific requirement, persons skilled in the art should understand that the second device 1200 may further include hardware components for implementing other additional functions. In addition, persons skilled in the art should understand that the second device 1200 may include only components or modules essential for implementing the embodiments of this application, but not necessarily include all the components shown in FIG. 12b.

A person of ordinary skill in the art may understand that all or some of the procedures of the methods in the foregoing embodiments may be implemented by a computer program instructing relevant hardware. The program may be stored in a computer-readable storage medium. When the program is executed, the procedures of the methods in the embodiments may be performed. The storage medium may be a magnetic disk, an optical disk, a ROM, a RAM, or the like.

As shown in FIG. 13, a communications system 1300 according to an embodiment of this application includes the first device 1100 and the second device 1200.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each procedure and/or each block in the flowcharts and/or the block diagrams and a combination of a procedure and/or a block in the flowcharts and/or the block diagrams. These computer program instructions may be provided to a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

## Claims

1. A network resource deployment method performed by a first device, the first device being a network slice subnet management unit, the method comprising the steps of:
• receiving (step 200) a target network management request, wherein the target network management request comprises target network requirement information of a target network, wherein the target network is a network slice subnet;
• determining (step 201), based on the target network requirement information, requirement information of a to-be-deployed network resource required for managing the target network, wherein the requirement information of the to-be-deployed network resource comprises at least one of:
∘ an uplink/downlink control plane cell user quantity; and
∘ radio bearer, RB, requirement information; and
• sending (step 202) a network resource management request to a second device, the second device being an element management unit, wherein the network resource management request comprises the requirement information of the to-be-deployed network resource.

2. The method according to claim 1, wherein the determining (step 201) requirement information of the to-be-deployed network resource required for managing the target network comprises:
∘ determining, based on the target network requirement information, requirement information of one or more network resources required for managing the target network; and
∘ determining the requirement information of the to-be-deployed network resource based on the requirement information of the one or more network resources required for managing the target network and instance information of a network resource already deployed in an existing network.

3. The method according to claim 2, wherein the method further comprises:
∘ sending a network resource query request to the second device, wherein the network resource query request comprises the requirement information of the one or more network resources required for managing the target network; and
∘ receiving a network resource query result sent by the second device, wherein the network resource query result comprises the instance information of the network resource already deployed in the existing network.

4. The method according to any one of claims 1 to 3, wherein the method further comprises:
∘ receiving a network resource management notification sent by the second device, wherein the network resource management notification comprises at least one of indication information and instance information of the to-be-deployed network resource, and the indication information indicates whether the to-be-deployed network resource is successfully deployed; and
∘ if determining that the to-be-deployed network resource is successfully deployed, managing the target network; or
if determining that the to-be-deployed network resource fails to be deployed, returning a target network management request failure.

5. The method according to any one of claims 2 to 4, wherein the instance information of the network resource already deployed in the existing network comprises at least one of a network resource identifier, a quantity of users supported by the network resource, a throughput supported by the network resource, coverage supported by the network resource, a capacity of the network resource, and a quantity of RBs supported by the network resource.

6. The method according to any one of claims 1 to 5, wherein the target network requirement information comprises one or more of a latency requirement, a coverage requirement, a user quantity requirement, a throughput requirement, and a reliability requirement.

7. A network resource deployment method performed by a second device, the second device being an element management unit, the method comprising the steps of:
• receiving (step 202) a network resource management request from a first device, the first device being a network slice subnet management unit, where the network resource management request includes requirement information of a to-be-deployed network resource, the to-be-deployed network resource being required for managing a target network, wherein the target network is a network slice subnet, wherein the requirement information of the to-be-deployed network resource includes at least one of:
∘ an uplink/downlink control plane cell user quantity; and
∘ radio bearer, RB, requirement information;
• deploying the to-be-deployed network resource based on the received requirement information.

8. The method according to claim 7, wherein the method further comprises:
• sending a network resource management notification to the first device, wherein the network resource management notification includes at least one of indication information and instance information of the to-be-deployed network resource, and the indication information indicates whether the to-be-deployed network resource is successfully deployed.

9. The method according to claim 7 or 8, wherein the method further comprises:
• receiving a network resource query request from the first device, wherein the network resource query request comprises the requirement information of the one or more network resources required for managing the target network; and
• sending a network resource query result to the first device, wherein the network resource query result comprises the instance information of the network resource already deployed in the existing network.

10. The method according to claim 9, wherein the sending the network resource query result to the first device comprises:
• in case that the network resource already deployed in the existing network cannot satisfy the requirement information of the one or more network resources required for managing the target network, sending the network resource query result to the first device, wherein the network resource query result includes the instance information of the network resource already deployed in the existing network; or
• in case that the network resource already deployed in the existing network can satisfy the requirement information of the one or more network resources required for managing the target network, sending the network resource query result to the first device, where the network resource query result includes identification information used to indicate the network resource that is already deployed in the existing network and that can satisfy the requirement information of the one or more network resources required for managing the target network.

11. A network slice subnet management unit comprising a processor coupled with a non-transitory storage medium storing executable instructions; wherein the executable instructions, when executed by the processor, cause the processor to carry out the method of any one of claims 1 to 6.

12. An element management unit comprising a processor coupled with a non-transitory storage medium storing executable instructions; wherein the executable instructions, when executed by the processor, cause the processor to carry out the method of any one of claims 7 to 10.

13. A system comprising a network slice subnet management unit according to claim 11 and an element management unit according to claim 12.

14. A computer-readable storage medium comprising instructions, which, when executed by a computer, cause the computer to carry out the method of any one of claims 1 to 6, or the method of any one of claims 7 to 10.

15. A computer program, when executed by a computer, causes the computer to carry out the method of any one of claims 1 to 6, or the method of any one of claims 7 to 10.

## Patentansprüche

1. Verfahren zur Bereitstellung von Netzwerkressourcen, das durch eine erste Vorrichtung durchgeführt wird, wobei es sich bei der ersten Vorrichtung um eine Netzwerk-Slice-Subnetzverwaltungseinheit handelt, wobei das Verfahren die folgenden Schritte umfasst:
• Empfangen (Schritt 200) einer Zielnetzwerkverwaltungsanforderung, wobei die Zielnetzwerkverwaltungsanforderung Informationen zu den Anforderungen an das Zielnetzwerk eines Zielnetzwerks umfasst, wobei das Zielnetzwerk ein Netzwerk-Slice-Subnetz ist;
• Ermitteln (Schritt 201), basierend auf den Informationen zu den Anforderungen an das Zielnetzwerk, von Anforderungsinformationen einer bereitzustellenden Netzwerkressource, die zum Verwalten des Zielnetzwerks erforderlich ist, wobei die Anforderungsinformationen der bereitzustellenden Netzwerkressource mindestens eines von Folgenden umfassen:
∘ eine Anzahl von Benutzern der Uplink-/Downlink-Steuerungsebenenzellen; und
∘ Informationen zu den Anforderungen an Funkträger, RB; und
• Senden (Schritt 202) einer Netzwerkressourcenverwaltungsanforderung an eine zweite Vorrichtung, wobei es sich bei der zweiten Vorrichtung um eine Elementverwaltungseinheit handelt, wobei die Netzwerkressourcenverwaltungsanforderung die Anforderungsinformationen der bereitzustellenden Netzwerkressource umfasst.

2. Verfahren nach Anspruch 1, wobei das Ermitteln (Schritt 201) der zum Verwalten des Zielnetzwerks erforderlichen Anforderungsinformationen der bereitzustellenden Netzwerkressource Folgendes umfasst:
∘ Ermitteln, basierend auf den Informationen zu den Zielnetzwerkanforderungen, von Anforderungsinformationen einer oder mehrerer Netzwerkressourcen, die zum Verwalten des Zielnetzwerks erforderlich sind; und
∘ Ermitteln der Anforderungsinformationen der bereitzustellenden Netzwerkressource basierend auf den Anforderungsinformationen der einen oder der mehreren Netzwerkressourcen, die zum Verwalten des Zielnetzwerks erforderlich sind, und von Instanzinformationen einer bereits in einem bestehenden Netzwerk bereitgestellten Netzwerkressource.

3. Verfahren nach Anspruch 2, wobei das Verfahren ferner Folgendes umfasst:
∘ Senden einer Anforderung zur Netzwerkressourcenabfrage an die zweite Vorrichtung, wobei die Anforderung zur Netzwerkressourcenabfrage die Anforderungsinformationen der einen oder der mehreren Netzwerkressourcen, die zum Verwalten des Zielnetzwerks erforderlich sind, umfasst; und
∘ Empfangen eines Ergebnisses der Netzwerkressourcenabfrage, das durch die zweite Vorrichtung gesendet wird, wobei das Ergebnis der Netzwerkressourcenabfrage die Instanzinformationen der bereits in dem bestehenden Netzwerk bereitgestellten Netzwerkressource umfasst.

4. Verfahren nach einem der Ansprüche 1 bis 3, wobei das Verfahren ferner Folgendes umfasst:
∘ Empfangen einer Benachrichtigung zur Netzwerkressourcenverwaltung, die durch die zweite Vorrichtung gesendet wird, wobei die Benachrichtigung zur Netzwerkressourcenverwaltung mindestens eines von Angabeinformationen und/oder Instanzinformationen der bereitzustellenden Netzwerkressource umfasst und die Angabeinformationen angeben, ob die bereitzustellende Netzwerkressource erfolgreich bereitgestellt worden ist; und,
∘ wenn ermittelt wird, dass die bereitzustellende Netzwerkressource erfolgreich bereitgestellt worden ist, Verwalten des Zielnetzwerks; oder,
wenn ermittelt wird, dass die bereitzustellende Netzwerkressource nicht bereitgestellt werden kann, Zurückgeben eines Fehlers bei der Zielnetzwerkverwaltungsanforderung.

5. Verfahren nach einem der Ansprüche 2 bis 4, wobei die Instanzinformationen der bereits in dem bestehenden Netzwerk bereitgestellten Netzwerkressource mindestens eines von einer Netzwerkressourcenkennung, einer Anzahl von durch die Netzwerkressource unterstützten Benutzern, einem durch die Netzwerkressource unterstützten Durchsatz, einer durch die Netzwerkressource unterstützten Abdeckung, einer Kapazität der Netzwerkressource und einer Anzahl von durch die Netzwerkressource unterstützten RBs umfasst.

6. Verfahren nach einem der Ansprüche 1 bis 5, wobei die Informationen zu den Anforderungen an das Zielnetzwerk eine oder mehrere von einer Latenzanforderung, einer Abdeckungsanforderung, einer Benutzeranzahlanforderung, einer Durchsatzanforderung und einer Zuverlässigkeitsanforderung umfassen.

7. Verfahren zur Bereitstellung von Netzwerkressourcen, das durch eine zweite Vorrichtung durchgeführt wird, wobei es sich bei der zweiten Vorrichtung um eine Elementverwaltungseinheit handelt, wobei das Verfahren die folgenden Schritte umfasst:
• Empfangen (Schritt 202) einer Netzwerkressourcenverwaltungsanforderung von einer ersten Vorrichtung, wobei es sich bei der ersten Vorrichtung um eine Netzwerk-Slice-Subnetzverwaltungseinheit handelt, wobei die Netzwerkressourcenverwaltungsanforderung Anforderungsinformationen einer bereitzustellenden Netzwerkressource beinhaltet, wobei die bereitzustellende Netzwerkressource zum Verwalten eines Zielnetzwerks erforderlich ist, wobei es sich bei dem Zielnetzwerk um ein Netzwerk-Slice-Subnetz handelt, wobei die Anforderungsinformationen der bereitzustellenden Netzwerkressource mindestens eines von Folgenden beinhalten:
∘ eine Anzahl von Benutzern der Uplink-/Downlink-Steuerungsebenenzellen; und
∘ Informationen zu den Anforderungen an Funkträger, RB;
• Bereitstellen der bereitzustellenden Netzwerkressource basierend auf den empfangenen Anforderungsinformationen.

8. Verfahren nach Anspruch 7, wobei das Verfahren ferner Folgendes umfasst:
• Senden einer Benachrichtigung zur Netzwerkressourcenverwaltung an die erste Vorrichtung, wobei die Benachrichtigung zur Netzwerkressourcenverwaltung mindestens eines von Angabeinformationen und Instanzinformationen der bereitzustellenden Netzwerkressource beinhaltet und die Angabeinformationen angeben, ob die bereitzustellende Netzwerkressource erfolgreich bereitgestellt worden ist.

9. Verfahren nach Anspruch 7 oder 8, wobei das Verfahren ferner Folgendes umfasst:
• Empfangen einer Anforderung zur Netzwerkressourcenabfrage von der ersten Vorrichtung, wobei die Anforderung zur Netzwerkressourcenabfrage die Anforderungsinformationen der einen oder der mehreren Netzwerkressourcen, die zum Verwalten des Zielnetzwerks erforderlich sind, umfasst; und
• Senden eines Ergebnisses der Netzwerkressourcenabfrage an die erste Vorrichtung, wobei das Ergebnis der Netzwerkressourcenabfrage die Instanzinformationen der bereits in dem bestehenden Netzwerk bereitgestellten Netzwerkressource umfasst.

10. Verfahren nach Anspruch 9, wobei das Senden des Ergebnisses der Netzwerkressourcenabfrage an die erste Vorrichtung Folgendes umfasst:
• für den Fall, dass die bereits in dem bestehenden Netzwerk bereitgestellte Netzwerkressource die Anforderungsinformationen der einen oder der mehreren Netzwerkressourcen, die zum Verwalten des Zielnetzwerks erforderlich sind, nicht erfüllen kann, Senden des Ergebnisses der Netzwerkressourcenabfrage an die erste Vorrichtung, wobei das Ergebnis der Netzwerkressourcenabfrage die Instanzinformationen der bereits in dem bestehenden Netzwerk bereitgestellten Netzwerkressource beinhaltet; oder
• für den Fall, dass die bereits in dem bestehenden Netzwerk bereitgestellte Netzwerkressource die Anforderungsinformationen der einen oder der mehreren Netzwerkressourcen, die zum Verwalten des Zielnetzwerks erforderlich sind, erfüllen kann, Senden des Ergebnisses der Netzwerkressourcenabfrage an die erste Vorrichtung, wobei das Ergebnis der Netzwerkressourcenabfrage Identifikationsinformationen beinhaltet, die dazu verwendet werden, die bereits in dem bestehenden Netzwerk bereitgestellte Netzwerkressource anzugeben, und die Anforderungsinformationen der einen oder mehreren Netzwerkressourcen, die zum Verwalten des Zielnetzwerks erforderlich sind, erfüllen kann.

11. Netzwerk-Slice-Subnetzverwaltungseinheit, umfassend einen Prozessor, der mit einem nichtflüchtigen Speichermedium gekoppelt ist, das ausführbare Anweisungen speichert; wobei die ausführbaren Anweisungen bei Ausführung durch den Prozessor den Prozessor dazu veranlassen, das Verfahren nach einem der Ansprüche 1 bis 6 durchzuführen.

12. Elementverwaltungseinheit, umfassend einen Prozessor, der mit einem nichtflüchtigen Speichermedium gekoppelt ist, das ausführbare Anweisungen speichert; wobei die ausführbaren Anweisungen bei Ausführung durch den Prozessor den Prozessor dazu veranlassen, das Verfahren nach einem der Ansprüche 7 bis 10 durchzuführen.

13. System, umfassend eine Netzwerk-Slice-Subnetzverwaltungseinheit nach Anspruch 11 und eine Elementverwaltungseinheit nach Anspruch 12.

14. Computerlesbares Speichermedium, umfassend Anweisungen, die, wenn sie durch einen Computer ausgeführt werden, den Computer dazu veranlassen, das Verfahren nach einem der Ansprüche 1 bis 6 oder das Verfahren nach einem der Ansprüche 7 bis 10 durchzuführen.

15. Computerprogramm, das, wenn es durch einen Computer ausgeführt wird, den Computer dazu veranlasst, das Verfahren nach einem der Ansprüche 1 bis 6 oder das Verfahren nach einem der Ansprüche 7 bis 10 durchzuführen.

## Revendications

1. Procédé de déploiement de ressources de réseau réalisé par un premier dispositif, le premier dispositif étant une unité de gestion de sous-réseau de tranche de réseau, le procédé comprenant les étapes suivantes :
• la réception (étape 200) d'une demande de gestion de réseau cible, dans lequel la demande de gestion de réseau cible comprend des informations sur les exigences de réseau cible d'un réseau cible, dans lequel le réseau cible est un sous-réseau de tranche de réseau ;
• la détermination (étape 201), sur la base des informations sur les exigences de réseau cible, des informations sur les exigences d'une ressource de réseau à déployer nécessaire à la gestion du réseau cible, dans lequel les informations sur les exigences de la ressource de réseau à déployer comprennent au moins l'un des éléments suivants :
∘ une quantité d'utilisateurs de cellules de plan de commande de liaison montante/descendante ; et
∘ des informations sur les exigences de support radio, RB ; et
• l'envoi (étape 202) d'une demande de gestion des ressources de réseau à un second dispositif, le second dispositif étant une unité de gestion d'éléments, dans lequel la demande de gestion des ressources de réseau comprend les informations sur les exigences de la ressource de réseau à déployer.

2. Procédé selon la revendication 1, dans lequel la détermination (étape 201) d'informations sur les exigences de la ressource de réseau à déployer nécessaire à la gestion du réseau cible comprend :
∘ la détermination, sur la base des informations sur les exigences de réseau cible, des informations sur les exigences d'une ou plusieurs ressources de réseau nécessaires à la gestion du réseau cible ; et
∘ la détermination des informations sur les exigences de la ressource de réseau à déployer sur la base des informations sur les exigences des une ou plusieurs ressources de réseau nécessaires à la gestion du réseau cible et des informations d'instance d'une ressource de réseau déjà déployée dans un réseau existant.

3. Procédé selon la revendication 2, dans lequel le procédé comprend en outre :
∘ l'envoi d'une demande de requête de ressources de réseau au second dispositif, dans lequel la demande de requête de ressources de réseau comprend les informations sur les exigences des une ou plusieurs ressources de réseau nécessaires à la gestion du réseau cible ; et
∘ la réception d'un résultat de requête de ressources de réseau envoyé par le second appareil, dans lequel le résultat de requête de ressources de réseau comprend les informations d'instance de la ressource de réseau déjà déployée dans le réseau existant.

4. Procédé selon l'une quelconque des revendications 1 à 3, dans lequel le procédé comprend en outre :
∘ la réception d'une notification de gestion de ressources de réseau envoyée par le second dispositif, dans lequel la notification de gestion de ressources de réseau comprend au moins l'une des informations d'indication et des informations d'instance de la ressource de réseau à déployer, et les informations d'indication indiquent si la ressource de réseau à déployer est déployée avec succès ; et
∘ s'il est déterminé que la ressource de réseau à déployer est déployée avec succès, la gestion du réseau cible ; ou
s'il est déterminé que la ressource de réseau à déployer échoue à être déployée, le retour d'un échec de demande de gestion de réseau cible.

5. Procédé selon l'une quelconque des revendications 2 à 4, dans lequel les informations d'instance de la ressource de réseau déjà déployée dans le réseau existant comprennent au moins l'un des éléments suivants : un identifiant de ressource de réseau, une quantité d'utilisateurs pris en charge par la ressource de réseau, un débit pris en charge par la ressource de réseau, une couverture prise en charge par la ressource de réseau, une capacité de la ressource de réseau et une quantité de RB pris en charge par la ressource de réseau.

6. Procédé selon l'une quelconque des revendications 1 à 5, dans lequel les informations sur les exigences de réseau cible comprennent l'une ou plusieurs des exigences suivantes : une exigence de latence, une exigence de couverture, une exigence de quantité d'utilisateurs, une exigence de débit et une exigence de fiabilité.

7. Procédé de déploiement de ressources de réseau réalisé par un second dispositif, le second dispositif étant une unité de gestion d'éléments, le procédé comprenant les étapes suivantes :
• la réception (étape 202) d'une demande de gestion de ressources de réseau provenant d'un premier dispositif, le premier dispositif étant une unité de gestion de sous-réseau de tranche de réseau, dans lequel la demande de gestion de ressources de réseau comporte des informations sur les exigences d'une ressource de réseau à déployer, la ressource de réseau à déployer étant nécessaire à la gestion d'un réseau cible, dans lequel le réseau cible est un sous-réseau de tranche de réseau, dans lequel les informations sur les exigences de la ressource de réseau à déployer comportent au moins l'un des éléments suivants :
∘ une quantité d'utilisateurs de cellules de plan de commande de liaison montante/descendante ; et
∘ des informations sur les exigences de support radio, RB ;
• le déploiement de la ressource de réseau à déployer sur la base des informations sur les exigences reçues.

8. Procédé selon la revendication 7, dans lequel le procédé comprend en outre :
• l'envoi d'une notification de gestion de ressources de réseau au premier dispositif, dans lequel la notification de gestion de ressources de réseau comporte au moins l'une des informations d'indication et des informations d'instance de la ressource de réseau à déployer, et les informations d'indication indiquent si la ressource de réseau à déployer est déployée avec succès.

9. Procédé selon la revendication 7 ou 8, dans lequel le procédé comprend en outre :
• la réception d'une demande de requête de ressources de réseau du premier dispositif, dans lequel la demande de requête de ressources de réseau comprend les informations sur les exigences des une ou plusieurs ressources de réseau nécessaires à la gestion du réseau cible ; et
• l'envoi d'un résultat de requête de ressources de réseau au premier dispositif, dans lequel le résultat de requête de ressources de réseau comprend les informations d'instance de la ressource de réseau déjà déployée dans le réseau existant.

10. Procédé selon la revendication 9, dans lequel l'envoi du résultat de requête de ressource de réseau au premier dispositif comprend :
• dans le cas où la ressource de réseau déjà déployée dans le réseau existant ne peut pas satisfaire aux informations sur les exigences des une ou plusieurs ressources de réseau nécessaires à la gestion du réseau cible, l'envoi du résultat de requête de ressource de réseau au premier dispositif, dans lequel le résultat de requête de ressource de réseau comporte les informations d'instance de la ressource de réseau déjà déployée dans le réseau existant ; ou
• dans le cas où la ressource de réseau déjà déployée dans le réseau existant peut satisfaire aux informations sur les exigences des une ou plusieurs ressources de réseau nécessaires à la gestion du réseau cible, l'envoi du résultat de requête de ressource de réseau au premier dispositif, dans lequel le résultat de requête de ressource de réseau comporte des informations d'identification utilisées pour indiquer la ressource de réseau déjà déployée dans le réseau existant et qui peut satisfaire aux informations sur les exigences des une ou plusieurs ressources de réseau nécessaires à la gestion du réseau cible.

11. Unité de gestion de sous-réseau de tranche de réseau comprenant un processeur couplé à un support de stockage non transitoire stockant des instructions exécutables ; dans laquelle les instructions exécutables, lorsqu'elles sont exécutées par le processeur, amènent le processeur à mettre en œuvre le procédé selon l'une quelconque des revendications 1 à 6.

12. Unité de gestion d'élément comprenant un processeur couplé à un support de stockage non transitoire stockant des instructions exécutables ; dans laquelle les instructions exécutables, lorsqu'elles sont exécutées par le processeur, amènent le processeur à mettre en œuvre le procédé selon l'une quelconque des revendications 7 à 10.

13. Système comprenant une unité de gestion de sous-réseau de tranche de réseau selon la revendication 11 et une unité de gestion d'élément selon la revendication 12.

14. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 6, ou le procédé selon l'une quelconque des revendications 7 à 10.

15. Programme informatique, qui, lorsqu'il est exécuté par un ordinateur, amène l'ordinateur à mettre en œuvre le procédé selon l'une quelconque des revendications 1 à 6 ou le procédé selon l'une quelconque des revendications 7 à 10.
